(19) Europäisches Patentamt
European Patent Office
Office européen des brevets

(11) EP 4 263 462 B1

(12) # EUROPÄISCHE PATENTSCHRIFT

(45) Veröffentlichungstag und Bekanntmachung des Hinweises auf die Patenterteilung:
**04.02.2026 Patentblatt 2026/06**

(21) Anmeldenummer: **21836514.6**

(22) Anmeldetag: **14.12.2021**

(51) Internationale Patentklassifikation (IPC):
***C04B 28/02** (2006.01)* ***C04B 40/00** (2006.01)*
***C04B 24/42** (2006.01)* ***C04B 103/65** (2006.01)*
***C04B 111/27** (2006.01)*

(52) Gemeinsame Patentklassifikation (CPC):
(C-Sets verfügbar)
**C04B 24/42; C04B 28/02; C04B 40/0039;**
C04B 2103/65; C04B 2111/27; C04B 2111/60
(Forts.)

(86) Internationale Anmeldenummer:
**PCT/EP2021/085614**

(87) Internationale Veröffentlichungsnummer:
**WO 2022/128994 (23.06.2022 Gazette 2022/25)**

(54) **VERDÜNNUNGSSTABILE WÄSSRIGE ZUSAMMENSETZUNG ZUR MASSENHYDROPHOBIERUNG VON MINERALISCHEN BAUSTOFFEN**

DILUTION-STABLE AQUEOUS COMPOSITION FOR THE MASS HYDROPHOBING OF MINERAL BUILDING MATERIALS

COMPOSITION AQUEUSE STABLE À LA DILUTION DESTINÉE À L’HYDROPHOBISATION DANS LA MASSE DES MATIÈRES DE CONSTRUCTION MINÉRALES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.12.2020 EP 20215314**

(43) Veröffentlichungstag der Anmeldung:
**25.10.2023 Patentblatt 2023/43**

(73) Patentinhaber: **Evonik Operations GmbH**
**45128 Essen (DE)**

(72) Erfinder:
- **REINSCHMIDT, Anke**
  **45326 Essen (DE)**
- **BAGUS, Nino**
  **45134 Essen (DE)**
- **LOBERT, Matthias**
  **45309 Essen (DE)**
- **HAVEKOST, Christian**
  **46282 Dorsten (DE)**

(74) Vertreter: **Evonik Patent Association**
**c/o Evonik Industries AG**
**IP Management**
**Postcode 84/339**
**Rodenbacher Chaussee 4**
**63457 Hanau (DE)**

(56) Entgegenhaltungen:
**EP-A1- 3 243 807** **WO-A1-2011/121032**
**CN-A- 105 293 992**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



**(Forts. nächste Seite)**

(52) Gemeinsame Patentklassifikation (CPC): (Forts.)

C-Sets
**C04B 28/02, C04B 14/06, C04B 14/28, C04B 24/32, C04B 24/42, C04B 24/42;**
**C04B 40/0039, C04B 24/42, C04B 24/42, C04B 2103/406**

## Beschreibung

Die vorliegende Erfindung betrifft wässrige Zusammensetzungen auf Basis von Organosiliciumverbindungen zur Massenhydrophobierung von mineralischen Baustoffen.

Die Verwendung von Organosiliciumverbindungen, insbesondere Silanen und Siloxanen, zur hydrophobierenden Imprägnierung und Massenhydrophobierung von mineralischen und organischen Baustoffen, insbesondere mit dem Ziel des Bautenschutzes, ist hinlänglich bekannt.

US 2,887,467 A beschreibt beispielsweise ein Verfahren zur Herstellung von Glykol-substituierten Organsiloxanen mit geringem Molekulargewicht. Dabei wird ein wasserunlösliches, nicht in Wasser dispergierbares Methylsilsesquioxan aus Einheiten der Formel $[CH_3SiO_{3/2}]$ bei einer Temperatur von ca. 150°C mit Ethylenglykol umgesetzt. Vorzugweise sollen dabei 3 mol Glykol pro mol Siliciumatome des Methylsilsesquioxans eingesetzt werden. Das erhaltene Produkt ist wasserlöslich und kann als Hydrophobierungsmittel für Mauerwerke eingesetzt werden. Organosiloxane, die sowohl SiC-gebundene $C_2$-$C_6$-Alkylreste als auch SiC-gebundene $C_7$-$C_{18}$-Alkylreste aufweisen, werden nicht offenbart.

DE 1 076 946 (Auslegeschrift) offenbart ein Verfahren zur Herstellung von zur Hydrophobierung und Appretierung geeigneten, in Benzol unlöslichen, jedoch in Wasser in allen Verhältnissen löslichen Organopolysiloxanen, dadurch gekennzeichnet, dass man Ethylenglykol mit einem Gemisch von Alkylalkoxysilanen, enthaltend gewichtsmäßig 50 bis 100 Molprozent eines Monoalkyltrialkoxysilans, 0 bis 50 Molprozent eines Trialkylalkoxysilans, 0 bis 10 Molprozent eines Dialkyldialkoxysilans und 0 bis 10 Molprozent eines Tetraalkoxysilans (deren siliciumgebundene Alkylgruppen aus Methyl- und/oder Ethylresten und deren Alkylgruppe des Alkoxyradikals aus dem Rest eines einwertigen Alkohols mit 1 bis 5 Kohlenstoffatomen besteht), wobei mehr als eine Hydroxylgruppe des Ethylenglykols je Alkoxygruppe in dem Gemisch der Alkylalkoxysilane vorliegt, in Gegenwart eines sauren Katalysators unter Erhitzen auf eine Temperatur unter 100° C unter gleichzeitiger Entfernung freigesetzter aliphatischer, einwertiger Alkohole zur Umsetzung bringt. Dabei sollen die Organopolysiloxane als siliciumgebundene Kohlenwasserstoffreste Methyl und/oder Ethylreste aufweisen. Die Organopolysiloxane sollen dabei lediglich in unverdünntem Zustand eine gute Lagerfähigkeit aufweisen. Der Wasserzusatz soll daher nur kurze Zeit vor dem Gebrauch geschehen, weil die Haltbarkeit der hergestellten Organopolysiloxane, nachdem das Wasser zugesetzt wurde, mit der Zeit abnimmt. Organosiloxane, die sowohl SiC-gebundene $C_2$-$C_6$-Alkylreste als auch SiC-gebundene $C_7$-$C_{18}$-Alkylreste aufweisen, werden nicht offenbart.

DE 10 2004 056 977 A1 offenbart eine wasserabweisende Gipszusammensetzung, enthaltend ein glykolfunktionelles Siloxangemisch, herstellbar durch die Umsetzung von einem Moläquivalent Alkyltrihalogensilan oder Alkyltrialkoxysilan mit mindestens 2,5 Moläquivalenten eines Glykols oder Gemisches von Glykolen. Als Alkylreste werden dabei einwertige, gegebenenfalls halogensubstituierte $C_1$-$C_{15}$-Kohlenwasserstoffreste beschrieben. Bevorzugt sind dabei aber kurzkettige Alkyreste wie $C_1$-$C_6$-Alkylreste, insbesondere der Methylrest und der Ethylrest. Organosiloxane, die sowohl SiC-gebundene $C_2$-$C_6$-Alkylreste als auch SiC-gebundene $C_7$-$C_{18}$-Alkylreste aufweisen, werden nicht offenbart.

DE 10 2005 019 254 A1 offenbart wässrige Baustoffbeschichtungsmittel, die eine glykolfunktionelle Organosiliciumverbindung als Hydrophobieradditiv enthalten, die bei 20 °C mindestens zu 10 g in 100 g Wasser löslich ist. Es wird beschrieben, dass die glykolfunktionellen Organosiliciumverbindungen als wässrige Lösungen emulgatorfrei eingesetzt werden können. Es wird weiterhin offenbart, dass die Organosiliciumverbindung siliciumgebundende einwertige, gegebenenfalls halogensubstituierte $C_1$-$C_8$-Kohlenwasserstoffreste aufweisen soll. Organosiloxane, die sowohl SiC-gebundene $C_2$-$C_6$-Alkylreste als auch SiC-gebundene $C_7$-$C_{18}$-Alkylreste aufweisen, werden nicht offenbart.

WO 2006/097206 A1 beschreibt ein Verfahren zur Hydrophobierung von Substraten mit Organosiliciumverbindungen, die herstellbar sind durch Umsetzung eines Moläquivalentes an Silan, das ausgewählt wird aus Kohlenwasserstofftrihalogensilan, Kohlenwasserstofftrikohlenwasserstoffoxysilan oder Gemischen davon mit 2,0 - 2,99 Moläquivalenten eines Glykols oder eines Gemisches von Glykolen. Die Organosiliciumverbindungen sollen wasserlöslich oder leicht in Wasser dispergierbar sein. Als siliciumgebundene Kohlenwasserstoffreste des eingesetzten Silans werden $C_1$-$C_{15}$-Kohlenwasserstoffreste offenbart. Besonders bevorzugt sind dabei die nicht substituierten $C_1$-$C_8$-Alkylreste, insbesondere der Methylrest und der Ethylrest. Organosiloxane, die sowohl SiC-gebundene $C_2$-$C_6$-Alkylreste als auch SiC-gebundene $C_7$-$C_{18}$-Alkylreste aufweisen, werden nicht offenbart.

WO 2013/053609 A1 beschreibt ein Verfahren zur Massehydrophobierung von Substraten mit bei 20 °C festen Organosiliciumverbindungen, die herstellbar sind durch Umsetzung eines Moläquivalentes an Silan, das ausgewählt wird aus Kohlenwasserstofftrihalogensilan, Kohlenwasserstofftrikohlenwasserstoffoxysilan oder Gemischen davon oder deren Teilhydrolysate, mit Polyhydroxyverbindungen in einem solchen Molverhältnis, dass pro Moläquivalent Halogen- oder Kohlenwasserstoffoxyrest 0,3 bis 1,3 Moläquivalente Hydroxyreste vorliegen. Die Organosiliciumverbindungen sollen stabil und sehr gut hydrophobierend, aber zugleich fest sein und nur eine geringe Wasserlöslichkeit aufweisen. Als SiC-gebundene Kohlenwasserstoffreste des eingesetzten Silans werden $C_1$-$C_{15}$-Kohlenwasserstoffreste offenbart. Besonders bevorzugt sind dabei nicht substituierte $C_1$-$C_8$-Alkylreste, insbesondere der Methylrest und der Ethylrest. Organosiloxane, die sowohl SiC-gebundene $C_2$-$C_6$-Alkylreste als auch SiC-gebundene $C_7$-$C_{18}$-Alkylreste aufweisen, werden nicht offenbart.

WO 00/46167 beschreibt eine wässrige, standfeste Creme, die zur hydrophobierenden Imprägnierung oder Grundierung von mineralischen Baustoffen verwendet werden kann. Die Creme enthält die Komponenten (A), welche ausgewählt werden aus (A1) $C_1$-$C_{20}$-Alkyl-$C_2$-$C_6$-alkoxysilanen und (A2) Alkoxygruppen enthaltendem Organopolysiloxan, (C) Emulgator und (D) organisches Lösemittel. Die Organopolysiloxane (A2) können gleiche oder verschiedene einwertige, gegebenenfalls halogensubstituierte, über SiC-gebundene $C_1$-$C_{20}$-Kohlenwasserstoffreste aufweisen. Besonders bevorzugt sind die nicht substituierten $C_1$-$C_{12}$-Alkylreste und der Phenylrest. Es wird beispielsweise ein Organopolysiloxan der Summenformel $(CH_3)_{0,7}(isoOctyl)_{0,3}(OCH_3)_{0,6}SiO_{1,2}$ beschrieben. Zusätzlich können Organopolysiloxane (B2) eingesetzt werden. Diese tragen Stickstoff aufweisende und Stickstoff freie Reste. Als Stickstoff freie Reste werden gegebenenfalls halogensubstituierte, SiC-gebundene $C_1$-$C_{20}$-Kohlenwasserstoffreste beschrieben. Insbesondere sind der Methylrest und der Isooctylrest bevorzugt. Organosiloxane, die sowohl SiC-gebundene $C_2$-$C_6$-Alkylreste als auch SiC-gebundene $C_7$-$C_{18}$-Alkylreste aufweisen, werden nicht offenbart.

WO 2012/136589 A1 offenbart wässrige Dispersionen von Organosiliciumverbindungen, Verfahren zu deren Herstellung sowie deren Verwendung, insbesondere zur hydrophobierenden Imprägnierung und Massehydrophobierung von mineralischen und organischen Baustoffen. Bei der Herstellung werden Organosiloxane eingesetzt, die gleiche oder verschiedene einwertige, SiC-gebundene, gegebenenfalls substituierte Kohlenwasserstoffreste aufweisen. Bevorzugt handelt es sich bei diesen Kohlenwasserstoffresten um gegebenenfalls mit sauerstoff- oder stickstoffhaltigen Gruppen substituierte Kohlenwasserstoffreste mit 1 bis 18 Kohlenstoffatomen, besonders bevorzugt um Alkylreste mit 1 bis 18 Kohlenstoffatomen oder um aromatische Kohlenwasserstoffreste mit 6 bis 9 Kohlenstoffatomen, ganz besonders bevorzugt um Methyl-, n-Hexyl-, n-Heptyl-, n-Octyl-, isoOctyl-, n-Dodecyl-, Phenyl- und Ethylphenylreste, insbesondere bevorzugt um den Methylrest. Organosiloxane, die sowohl SiC-gebundene $C_2$-$C_6$-Alkylreste als auch SiC-gebundene $C_7$-$C_{18}$-Alkylreste aufweisen, werden nicht offenbart.

EP 1 982 964 A1 betrifft die Verwendung einer in Wasser dispergierbaren, redispergierbaren oder löslichen Mischung oder einer wässrigen Zusammensetzung für den Schutz von Substraten vor Korrosion, wobei die Mischung bzw. Zusammensetzung auf mindestens einem in Wasser löslichen organischen Polymer und mindestens einer Organosiliciumverbindung basieren. Als Organosiliciumverbindung wird ein Oligomerengemisch von Propylethoxysiloxanen offenbart.

EP 3 243 807 A1 betrifft die Verwendung einer wässrigen Öl-in-Wasser-Emulsion, die ein Propylethoxysilanoligomeren-Gemisch oder ein Gemisch aus einem Propylethoxysilanoligomeren-Gemisch und Octyltriethoxysilan in einem Gewichtsverhältnis von 3 zu 1 bis 1 zu 3, mindestens einen Emulgator oder ein Emulgatorsystem, und mindestens einen Gehalt an einem 2-Aminoethanol und Wasser enthält, als Zusatz bei der von hydraulisch abbindenden Zementmischungen wie Mörtel, Estrich oder Beton zur Minderung des Schwundverhaltens. Die Emulsion wird zudem als hydrophobierend beschrieben. Organosiloxane, die sowohl SiC-gebundene $C_2$-$C_6$-Alkylreste als auch SiC-gebundene $C_7$-$C_{18}$-Alkylreste aufweisen, werden nicht offenbart.

CN 103449750 B betrifft ein Imprägniermittel bzw. Abdichtungsmittel, das auf Beton, Ziegeln und Mörtel aufgebracht werden kann. Das Imprägniermittel wird hergestellt, indem ein Emulgator, ein Polyvinylalkohol, ein Silan-Haftvermittler und Aluminiumsulfat in Wasser bei 50 bis 70 °C in Wasser unter Rühren gelöst und anschließend Alkyltriethoxysilane unter Rühren hinzugegeben werden, wobei der pH auf 3 bis 6 eingestellt wird und anschließend weiter Wasser hinzugegeben wird, bis man eine stabile Emulsion erhält. Dabei werden insbesondere Mischungen aus zwei oder mehr Alkyltriethoxysilanen ausgewählt aus Butyltriethoxysilan, Octyltriethoxysilan, Decyltriethoxysilan und Tetradecyltriethoxysilan beschrieben. Organosiloxane, die sowohl SiC-gebundene $C_2$-$C_6$-Alkylreste als auch SiC-gebundene $C_7$-$C_{18}$-Alkylreste aufweisen, werden nicht offenbart.

CN 103819127 A betrifft ein Imprägniermittel für zementöse Produkte wie Mörtel und Beton. Das Imprägniermittel enthält Octyltriethoxysilan, ein Methylsiliconharz und einen Emulgator. Zur Herstellung des enthaltenen Methylsiliconharzes werden Methyltriethoxysilan und cyclisches Dimethylsiloxan in Gegenwart von Trifluormethansulfonsäure als Katalysator equilibriert und anschließend mit Wasser umgesetzt, wobei das dabei freiwerdende Ethanol abdestilliert wird. Organosiloxane, die sowohl SiC-gebundene $C_2$-$C_6$-Alkylreste als auch SiC-gebundene $C_7$-$C_{18}$-Alkylreste aufweisen, werden nicht offenbart.

CN 105111932 A beschreibt ein Imprägniermittel für Baustoffe, wobei das Imprägniermittel ein Umsetzungsprodukt aus einer Zusammensetzung ist, die nichtionische und anionische Emulgatoren, Wasser, cyclische Silicone und Alkoxysilane enthält. Als cyclische Silicone werden Dimethylcyclosiloxane eingesetzt. Die eingesetzten Alkoxysilane weisen SiC-gebundene $C_1$-$C_{18}$-Alkylreste auf. Insbesondere werden Methyltrimethoxysilan, Propyltrimethoxysilan und Propyltriethoxysilan verwendet. Organosiloxane, die sowohl SiC-gebundene $C_2$-$C_6$-Alkylreste als auch SiC-gebundene $C_7$-$C_{18}$-Alkylreste aufweisen, werden nicht offenbart.

CN 105293992 A betrifft Imprägniermittel für Holz und ihre Herstellung. Das Imprägniermittel wird aus einem Siliconharzpräpolymer, einer Mischung aus einem hydroxyfunktionellen Siliconöl und einem Dimethyl-Siliconöl, einem Vernetzer auf Organosilicium-Basis, langkettigen Alkylsilanen, quaternären Ammoniumsalzen auf Organosilicium-Basis, organischen Lösemitteln, Hilfsstoffen und Nanofüllstoffen hergestellt. Das Siliconharzpräpolymer ist ein Umsetzungsprodukt aus u.a. Propyltriethoxysilan, Octyltriethoxysilan, Decamethylcyclopentasiloxan (D5), Ethanol und Wasser. Das

Siliconharzpräpolymer wird in der Folge weiter reaktiv umgesetzt mit einem Reaktionsprodukt aus einem Siliconöl und Triethoxysilan als Vernetzer und weiteren Komponenten. Als Lösemittel wird Ethanol eingesetzt. Es handelt sich also bei dem Imprägniermittel nicht um eine wässrige Zusammensetzung. Zusammensetzungen, die neben mindestens einem Organosiloxan, das SiC-gebundene $C_2$-$C_6$-Alkylreste und SiC-gebundene $C_7$-$C_{18}$-Alkylreste aufweist, noch mindestens einen Emulgator (B) und Wasser enthalten, werden nicht offenbart.

CN 107556050 A beschreibt ein Silan-Pasten-Imprägniermittel, das 40-70 Gew.-% eines Alkylalkoxysilans, 10-40 Gew.-% eines reaktiven Siloxan-Oligomers, 4-15 Gew.-% eines cyclischen Siloxans, 0,5-2 Gew.-% einer oberflächenaktiven Substanz und 10-20 Gew.-% Wasser enthält. Das reaktive Siloxan-Oligomer ist vorzugsweise ein Hydroxy- oder Alkoxy-terminiertes Polydimethlysiloxan. Das Alkylalkoxysilan ist eine Mischung aus einem trifunktionellen Alkylalkoxysilan und einem difunktionellen Alkylalkoxysilan. Vorzugsweise ist das trifunktionelle Alkylalkoxysilan Propyltriethoxysilan, n-Butyltriethoxysilan, n-Octyltriethoxysilan, Cetyltriethoxysilan oder eine Kombination dieser Verbindungen und das difunktionelle Alkylalkoxysilan Methylalkyldimethoxysilan, Methylalkyldiethoxysilan oder eine Kombination dieser Verbindungen, wobei die Alkylgruppe Isobutyl n-Octyl, Dodecyl oder Phenyl ist. Siloxane, die sowohl SiC-gebundene $C_2$-$C_6$-Alkylreste als auch SiC-gebundene $C_7$-$C_{18}$-Alkylreste aufweisen, werden nicht offenbart.

DD 137720 beschreibt ein basisch katalysiertes Verfahren zur Herstellung von Alkoxyalkylpolysiloxanen. Im ersten Schritt des Verfahrens werden Alkylalkoxysilane in Gegenwart von KOH mit Dimethylcyclosiloxan zu höhermolekularen Spezies equilibriert. Im zweiten Schritt wird eine gezielte Kondensation erreicht durch den Zusatz definierter Mengen Wasser bei gleichzeitiger destillativer Ethanol-Entfernung, optional schließt sich noch ein weiterer Equilibrierschritt an. Siloxane, die sowohl SiC-gebundene $C_2$-$C_6$-Alkylreste als auch SiC-gebundene $C_7$-$C_{18}$-Alkylreste aufweisen, werden nicht offenbart.

WO 2006/081892 A1 offenbart wässrige Öl-in-Wasser-Emulsionen, die funktionelle Alkoxysilane und/oder deren kondensierte Oligomere und/oder Organoalkoxysiloxane, mindestens einen Emulgator und Wasser enthalten. Die Emulsionen können zum Hydrophobieren von porösen mineralischen Baustoffen verwendet werden. Die wässrigen Emulsionen sollen dabei in konzentrierter Form und auch nach einfachem Verdünnen mit Wasser ausreichend stabil sein. Dies wird durch eine gezielt eingestellte Tröpfchengrößenverteilung erreicht. Dabei soll die Anwesenheit von Oligomeren das Emulgierverhalten der Ölphase verbessern und so kleinere Tröpfchendurchmesser erreichbar sein als beim Emulgieren von Alkoxysilanen. Als Beispiele werden unter anderem Emulsionen beschrieben, die Octyltriethoxyilan und Propyltriethoxysilan-Oligomere mit einem Oligomerisierungsgrad von 2 bis 4 enthalten. Organosiloxane, die sowohl SiC-gebundene $C_2$-$C_6$-Alkylreste als auch SiC-gebundene $C_7$-$C_{18}$-Alkylreste aufweisen, werden nicht offenbart.

Die Bereitstellung von Zusammensetzungen auf der Basis von Organosiliciumverbindungen zur Imprägnierung und Massenhydrophobierung von mineralischen und organischen Baustoffen stellt offensichtlich eine große Herausforderung dar. Die Zusammensetzungen sollen einerseits eine gute hydrophobierende Wirkung zeigen, was die Verwendung von hydrophoben Organosiliciumverbindungen erfordert. Andererseits sollen die Zusammensetzung flüssig sein, um eine einfache Verarbeitung und Anwendung zu ermöglichen, dabei aber aus Gründen des Gesundheits- und Umweltschutzes sowie aus Sicherheitsaspekten (z.B. Brennbarkeit) zugleich auch möglichst keine organischen Lösemittel enthalten. Insofern sind wässrige Zusammensetzungen vorzuziehen. Wässrige Zusammensetzungen sind aber aufgrund der naturgemäß geringen Wasserlöslichkeit der hydrophoben Organosiliciumverbindungen ohne weitere Zusatzstoffe nicht homogen. Um wässrige Zusammensetzungen auf Basis von hydrophoben Organosiliciumverbindungen herzustellen, die keine mit bloßem Auge sichtbare Phasenseparation zeigen, werden daher Emulgatoren eingesetzt. Dadurch können homogen milchige/trübe Emulsionen/Dispersionen erhalten werden. Allerdings ist auch bei diesen Zusammensetzungen, nach längerer Lagerung eine Entmischung zu erkennen. Im Falle von stark verdünnten Zusammensetzungen, also Zusammensetzungen mit einem hohen Wasseranteil, ist dieser Effekt besonders stark ausgeprägt. Eine hohe Lagerstabilität und eine ausreichende Verdünnungsstabilität können z.B. durch höhere Mengen an Emulgator erreicht werden. Dies ist aber ebenfalls nicht wünschenswert, da sich die Emulgatoren nachteilig auf die Eigenschaften der Baustoffe auswirken. Emulgatoren können sich zudem auch ungünstig auf das Abbindeverhalten von hydraulischen Bindemitteln auswirken, die mechanischen Eigenschaften negativ beeinflussen, zu Verfärbungen führen und die wasserabweisenden Eigenschaften der Baustoffe verringern. Zudem können sie in Verbindung mit Regenwasser oder Bodenfeuchtigkeit ausgewaschen werden und dabei die Hydrophobierungsmittel mitreißen. Eine weitere Möglichkeit wäre es, die Viskosität der kontinuierlichen Phase der Emulsion zu erhöhen z.B. unter Einsatz von Verdickern. Eine erhöhte Viskosität ist unter Berücksichtigung der in der Praxis üblichen weiteren Verwendung und Handhabung aber nicht zielführend. Zusammenfassend bleibt also festzuhalten, dass ein wesentliches Problem von Emulsionen, die Organosiliciumverbindungen wie Silane oder Siloxane und/oder deren Equilibrate bzw. Kondensate enthalten, ihre nicht ausreichende Lagerstabilität und Verdünnungsstabilität ist.

Es bestand somit ein Bedarf an Zusammensetzungen auf der Basis von Organosiliciumverbindungen, die eine gute hydrophobierende Wirkung aber zugleich eine hohe Lagerstabilität sowie Verdünnungsstabilität zeigen.

Aufgabe der vorliegenden Erfindung war es daher, zumindest einen Nachteil des Standes der Technik zu überwinden. Es bestand insbesondere die Aufgabe, Zusammensetzungen auf der Basis von Organosiliciumverbindungen bereitzustellen, die eine gute hydrophobierende Wirkung und zugleich eine hohe Lagerstabilität sowie Verdünnungsstabilität zeigen.

Überraschenderweise wurde nun gefunden, dass eine Zusammensetzung, enthaltend mindestens ein Organosiloxan (A), mindestens einen Emulgator (B) und Wasser, bei der das enthaltene Organosiloxan (A) SiC-gebundene $C_2$-$C_6$-Alkylreste und SiC-gebundene $C_7$-$C_{18}$-Alkylreste aufweist, diese Aufgabe löst.

Insbesondere überraschend wurde dabei festgestellt, dass Organosiloxane, die die sowohl SiC-gebundene $C_2$-$C_6$-Alkylreste als auch SiC-gebundene $C_7$-$C_{18}$-Alkylreste tragen, zu einer höheren Lagerstabilität als auch Verdünnungsstabilität führen, als vergleichbare Organosiloxane, die sich lediglich darin unterscheiden, dass sie entweder keine SiC-gebundenen $C_2$-$C_6$-Alkylreste oder keine SiC-gebundenen $C_7$-$C_{18}$-Alkylreste tragen.

Ein erster Gegenstand der Erfindung ist daher eine Zusammensetzung, enthaltend mindestens ein Organosiloxan (A), mindestens einen Emulgator (B) und Wasser, dadurch gekennzeichnet, dass das Organosiloxan (A) SiC-gebundene $C_2$-$C_6$-Alkylreste und SiC-gebundene $C_7$-$C_{18}$-Alkylreste aufweist.

Ein weiterer Gegenstand der Erfindung ist ein Verfahren zur Herstellung von Organosiloxanen (A), vorzugsweise zur Herstellung der erfindungsgemäßen Zusammensetzung, umfassend einen Verfahrensschritt, bei dem eine Reaktionsmischung aus

i. mindestens einem $C_2$-$C_6$-Alkylalkoxysilan und/oder mindestens einem $C_2$-$C_6$-Alkylalkoxysiloxan, vorzugsweise mindestens einem $C_2$-$C_6$-Alkylalkoxysiloxan, insbesondere einem Propyltriethoxysilan-Oligomeren-Gemisch,
ii. mindestens einem $C_7$-$C_{18}$-Alkylalkoxysilan und/oder mindestens einem $C_7$-$C_{18}$-Alkylalkoxysiloxan, vorzugsweise mindestens einem $C_7$-$C_{18}$-Alkylalkoxysilan, insbesondere Octyltriethoxysilan,
iii. Wasser,
iv. vorzugsweise mindestens einem mono- oder polyfunktionellen $C_2$-$C_{10}$-Alkohol,
v. vorzugsweise mindestens einem cyclischen Dimethylsiloxan,
vi. mindestens einem Tetraalkylammoniumhydroxid, vorzugsweise Tetrabutylammoniumhydroxid,
vii. mindestens einer Supersäure, vorzugsweise Trifluormethansulfonsäure,
viii. und gegebenenfalls weiteren Stoffen

umgesetzt wird.

Noch ein weiterer Gegenstand der Erfindung ist die Verwendung der erfindungsgemäßen Zusammensetzung als verdünnungsstabiles Hydrophobierungsmittel.

Noch ein weiterer Gegenstand der Erfindung ist eine hydraulisch abbindende Zusammensetzung, enthaltend die Komponenten

a) mindestens ein hydraulisches Bindemittel, vorzugsweise Zement,
b) mindestens eine erfindungsgemäße Zusammensetzung,
c) vorzugsweise mindestens einen Zuschlagsstoff ausgewählt aus der Gruppe bestehend aus Sand, Kies, Kalkstein und Kreide,
d) vorzugsweise zusätzliches Wasser.

Vorteilhafte Ausgestaltungen der Erfindung sind in den nachgeordneten Ansprüchen, den Beispielen und der Beschreibung angegeben. Darüber hinaus wird ausdrücklich darauf hingewiesen, dass die Offenbarung zu den Gegenständen der vorliegenden Erfindung alle Kombinationen von einzelnen Merkmalen der vorliegenden bzw. nachfolgenden Beschreibung der Erfindung und der Patentansprüche einschließt. Insbesondere gelten Ausführungsformen eines erfindungsgemäßen Gegenstands *mutatis mutandis* auch für die Ausführungsformen der anderen erfindungsgemäßen Gegenstände.

Die erfindungsgemäßen Gegenstände und ihre bevorzugten Ausführungsformen werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören.

Werden nachfolgend Mittelwerte angegeben, so handelt es sich, wenn nicht anders angegeben, um Zahlenmittel. Werden nachfolgend Messwerte, Parameter oder Stoffeigenschaften angegeben, die durch Messung bestimmt werden, so handelt es sich, wenn nicht anders angegeben, um Messwerte, Parameter oder Stoffeigenschaften gemessen bei 25 °C sowie vorzugsweise bei Normaldruck. Unter Normaldruck wird ein Druck von 101,3 kPa, vorzugsweise 101325 Pa verstanden.

Werden nachfolgend Zahlenbereiche in der Form "X bis Y" angegeben, wobei X und Y die Grenzen des Zahlenbereichs darstellen, so ist dies gleichbedeutend mit der Angabe "von mindestens X bis einschließlich Y", sofern

nicht anders angegeben. Bereichsangaben schließen die Bereichsgrenzen X und Y also mit ein, sofern nicht anders angegeben.

Der Ausdruck "$C_x$-$C_y$" steht für x bis y Kohlenstoffatome. Ein $C_x$-$C_y$-Alkylrest ist also beispielsweise ein Alkylrest mit x bis y Kohlenstoffatomen, ein $C_x$-$C_y$-Alkoxyrest ist analog ein Alkoxyrest mit x bis y Kohlenstoffatomen, ein $C_x$-$C_y$-Alkohol ein Alkohol mit x bis y Kohlenstoffatomen usw.

Die Wiederholungseinheiten in den nachfolgenden Formeln können statistisch verteilt sein. Statistische Verteilungen sind blockweise aufgebaut mit einer beliebigen Anzahl an Blöcken und einer beliebigen Sequenz oder unterliegen einer randomisierten Verteilung, sie können auch alternierend aufgebaut sein, oder auch über die Kette, sofern eine solche vorliegt, einen Gradienten bilden, insbesondere können sie auch alle Mischformen bilden, bei denen gegebenenfalls Gruppen unterschiedlicher Verteilungen aufeinanderfolgen können.

Die erfindungsgemäße Zusammensetzung enthält mindestens ein Organosiloxan (A), mindestens einen Emulgator (B) und Wasser, wobei das Organosiloxan (A) SiC-gebundene $C_2$-$C_6$-Alkylreste und SiC-gebundene $C_7$-$C_{18}$-Alkylreste aufweist.

Die erfindungsgemäße Zusammensetzung enthält also Wasser. Organische Lösemittel sind somit nicht erforderlich. Dies ist vorteilhaft, da organische Lösemittel unangenehme Gerüche, Gesundheits- und Umweltschäden sowie explosive Dämpfe verursachen können. Unter organischen Lösemitteln werden flüchtige organische Stoffe sowie deren Mischungen verstanden, die (bei Normaldruck) einen Siedepunkt $\leq 200°C$ aufweisen, bei Normalbedingungen (20°C und 101,3 kPa) flüssig sind und dazu verwendet werden, andere Stoffe zu lösen oder zu verdünnen, ohne sie chemisch zu verändern. Die entspricht der Definition Technische Regeln für Gefahrstoffe (TRGS) 610 der Bundesanstalt für Arbeitsschutz und Arbeitsmedizin (Ausgabe Januar 2011). Es ist daher bevorzugt, dass der Massenanteil von organischen Lösemitteln bezogen auf die Gesamtmasse Zusammensetzung weniger als 15%, vorzugweise weniger als 10% insbesondere weniger als 5% beträgt. Es ist besonders bevorzugt, dass die Zusammensetzung (im Wesentlichen) frei von organischen Lösemitteln ist. Es ist besonders bevorzugt, dass der Massenanteil von Ethanol bezogen auf die Gesamtmasse Zusammensetzung weniger als 15%, vorzugweise weniger als 10% insbesondere weniger als 5% beträgt. Es ist besonders bevorzugt, dass die Zusammensetzung (im Wesentlichen) frei von Ethanol ist. Als organische Lösemittel sind beispielsweise aber nicht ausschließlich aliphatische sowie aromatische Kohlenwasserstoffe mit einem Siedepunkt oberhalb der Raumtemperatur, wie $C_6$- bis $C_{12}$-Alkane, Benzin, Waschbenzin, Diesel, Kerosin, Toluol, Xylol, Alkohole bzw. Polyole, wie Pentanol, Hexanol, Oktanol, Nonanol, Isononanol, Glycerin, Ether, Ester, Aldehyde, Ketone oder ein Gemisch aus mindestens zwei der zuvor genannten organischen Lösemittel geeignet. Wie bereits erläutert, wird auf die Verwendung von organischen Lösemitteln aber vorzugsweise verzichtet.

Vorzugsweise ist die Zusammensetzung eine Dispersion. Dabei ist es weiterhin bevorzugt, dass das Dispersionsmedium den überwiegenden Teil des in der Zusammensetzung enthaltenen Wassers umfasst und die disperse Phase den überwiegenden Teil der in der Zusammensetzung enthaltenen Organosiloxane. Es ist aber auch möglich, wenn auch weniger bevorzugt, dass die disperse Phase den überwiegenden Teil des in der Zusammensetzung enthaltenen Wassers umfasst und das Dispersionsmittel den überwiegenden Teil der in der Zusammensetzung enthaltenen Organosiloxane.

Die Dispersion kann beispielsweise eine Suspension oder eine Emulsion sein. Bei der Emulsion kann es sich beispielsweise um eine Wasser-in-Öl-Emulsion (W/O-Emulsion) oder eine Öl-in-Wasser-Emulsion (O/W-Emulsion) handeln. Es ist aber bevorzugt, dass es sich bei der Zusammensetzung um eine Emulsion, vorzugsweise eine Öl-in-Wasser-Emulsion (O/W-Emulsion) handelt. Es ist weiterhin bevorzugt, dass der überwiegende Teil der in der Zusammensetzung enthaltenen Organosiloxane in der Öl-Phase enthalten sind.

Unter einem Organosiloxan wird dabei eine Verbindung verstanden, die an Siliziumatome gebundene organische Reste sowie Struktureinheiten der Formel ≡Si-O-Si≡ aufweist, wobei "≡" für die drei verbleibenden Valenzen des betrachteten Siliziumatoms steht. Vorzugsweise enthalten oder bestehen die Organosiloxane aus Einheiten ausgewählt aus der Gruppe bestehend aus $M = [R_3SiO_{1/2}]$, $D = [R_2SiO_{2/2}]$ und $T = [RSiO_{3/2}]$ und optional $Q = [SiO_{4/2}]$, wobei R für einen einbindigen organischen Rest steht. Die Reste R können dabei auch teilweise durch nichtorganische einbindige Reste ersetzt sein, wie beispielsweise Wasserstoffatome, Hydroxylgruppen oder Chloratome. Die Reste R können jeweils unabhängig voneinander gewählt werden und sind im paarweisen Vergleich gleich oder unterschiedlich. Lineare Organosiloxane sind aus zwei M-Einheiten und gegebenenfalls zusätzlichen D-Einheiten zusammengesetzt, enthalten aber keine T- oder Q-Einheiten. Verzweigte Organosiloxane dagegen enthalten neben M-Einheiten und gegebenenfalls zusätzlichen D-Einheiten zwingend mindestens eine T-Einheit oder Q-Einheit. Als Referenz zu der verwendeten M-, D-, T-, Q-Nomenklatur zur Beschreibung der Einheiten von Organosiloxanen sei W. Noll, Chemie und Technologie der Silicone, Verlag Chemie GmbH, Weinheim (1960), Seite 2 ff. angeführt.

Die erfindungsgemäße Zusammensetzung enthält mindestens ein Organosiloxan (A). Das Organosiloxan (A) weist dabei sowohl SiC-gebundene $C_2$-$C_6$-Alkylreste als auch SiC-gebundene $C_7$-$C_{18}$-Alkylreste auf. Unter einem $C_x$-$C_y$-Alkylrest ist dabei ein Alkylrest mit x bis y Kohlenstoffatomen zu verstehen. Ein $C_2$-$C_6$-Alkylrest ist also ein Alkylrest mit 2 bis 6 Kohlenstoffatomen, also ein Alkylrest mit 2, 3, 4, 5 oder 6 Kohlenstoffatomen. Ein $C_7$-$C_{18}$-Alkylrest ist wiederum ein Alkylrest mit 7 bis 18 Kohlenstoffatomen, also ein Alkylrest mit 7, 8, 9, 10, 11, 12, 13, 14, 15, 16, 17 oder 18

Kohlenstoffatomen. Die Alkylreste können jeweils unabhängig voneinander linear, verzweigt oder cyclisch sein. Vorzugsweise sind die Alkylreste linear oder verzweigt, insbesondere linear.

Besagte SiC-gebundene $C_2$-$C_6$-Alkylreste als auch besagte SiC-gebundene $C_7$-$C_{18}$-Alkylreste des Organosiloxans (A) bestehen ausschließlich aus Kohlenstoffatomen und Wasserstoffatomen. Besagte SiC-gebundene $C_2$-$C_6$-Alkylreste als auch besagte SiC-gebundene $C_7$-$C_{18}$-Alkylreste des Organosiloxans (A) enthalten also keine Heteroatome. Ein Heteroatom ist dabei ein Atom, das weder ein Kohlenstoffatom noch ein Wasserstoffatom ist.

Die erfindungsgemäße Zusammensetzung ist daher eine Zusammensetzung, enthaltend mindestens ein Organosiloxan (A), mindestens einen Emulgator (B) und Wasser, dadurch gekennzeichnet, dass das Organosiloxan (A) SiC-gebundene $C_2$-$C_6$-Alkylreste und SiC-gebundene $C_7$-$C_{18}$-Alkylreste aufweist, welche ausschließlich aus Kohlenstoffatomen und Wasserstoffatomen bestehen.

Gleichbedeutend ist die erfindungsgemäße Zusammensetzung daher eine Zusammensetzung, enthaltend mindestens ein Organosiloxan (A), mindestens einen Emulgator (B) und Wasser, dadurch gekennzeichnet, dass das Organosiloxan (A) SiC-gebundene $C_2$-$C_6$-Alkylreste und SiC-gebundene $C_7$-$C_{18}$-Alkylreste aufweist, welche keine Heteroatome enthalten.

Sofern nicht explizit anders angegeben, werden im Rahmen der vorliegenden Offenbarung unter Alkylresten nur solche Alkylreste verstanden, die keine Heteroatome umfassen. Sofern nicht explizit anders angegeben, weist daher ein Alkylrest mit x Kohlenstoffatomen, hier auch als $C_x$-Alkylrest bezeichnet, $2 \cdot x+1$ Wasserstoffatome auf. Beispielsweise besteht ein $C_3$-Alkylrest (auch als Propylrest bezeichnet) aus 3 Kohlenstoffatomen und 7 Wasserstoffatomen, ein $C_8$-Alkylrest (auch als Octylrest bezeichnet) besteht wiederum aus 8 Kohlenstoffatomen und 17 Wasserstoffatomen. Die Alkylreste können dabei linear oder verzweigt sein. Beispielsweise kann "Butyl" also für n-Butyl (auch als Butan-1-yl bezeichnet), sec-Butyl (auch als Butan-2-yl oder 1-Methylpropyl bezeichnet), iso-Butyl (auch als 2-Methylpropan-1-yl oder 2-Methylpropyl bezeichnet) und/oder tert-Butyl (auch als 2-Methylpropan-2-yl oder 1,1-Dimethylethyl bezeichnet) stehen.

Bei den SiC-gebundenen $C_2$-$C_6$-Alkylresten handelt es sich vorzugsweise um $C_2$-$C_5$-Alkylreste insbesondere um Propylreste. Die $C_2$-$C_6$-Alkylreste können paarweise unterschiedlich oder gleich sein. Vorzugweise sind alle $C_2$-$C_6$-Alkylreste identisch.

Bei den SiC-gebundenen $C_7$-$C_{18}$-Alkylresten handelt es sich vorzugsweise um $C_7$-$C_9$-Alkylreste insbesondere um Octylreste. Die $C_7$-$C_{18}$-Alkylresten können paarweise unterschiedlich oder gleich sein. Vorzugsweise sind alle $C_7$-$C_{18}$-Alkylresten identisch.

Es ist somit bevorzugt, dass die SiC-gebundenen $C_2$-$C_6$-Alkylreste und SiC-gebundenen $C_7$-$C_{18}$-Alkylreste SiC-gebundene $C_2$-$C_5$-Alkylreste und SiC-gebundene $C_7$-$C_9$-Alkylreste sind. Es ist weiterhin bevorzugt, dass die SiC-gebundenen $C_2$-$C_6$-Alkylreste und SiC-gebundenen $C_7$-$C_{18}$-Alkylreste Propylreste und Octylreste sind. Dabei ist es insbesondere bevorzugt, dass die Propylreste n-Propylreste sind und die Octylreste n-Octylreste sind.

Unter einem SiC-gebundenen Alkylrest wird ein Alkylrest verstanden, der über eines seiner Kohlenstoffatome an ein Siliziumatom gebunden ist. Der SiC-gebundene Alkylrest liegt also Teil einer Struktureinheit ≡Si-Alkyl vor, wobei "≡" für die drei verbleibenden Valenzen des betrachteten Siliziumatoms steht. Im Gegensatz dazu handelt es sich beispielsweise bei Alkoxygruppen um SiOCgebundene Alkylreste, bei denen der Alkylrest Teil einer Struktureinheit ≡Si-O-Alkyl ist.

Es ist bevorzugt, dass das Organosiloxan (A) der erfindungsgemäßen Zusammensetzung Einheiten der Formel

$$R^1Si(OR^2)_aO_{(3-a)/2} \qquad (I),$$

und vorzugsweise Einheiten der Formel

$$R^3{}_2Si(OR^2)_bO_{(2-b)/2} \qquad (II),$$

enthält oder aus ihnen besteht,
in denen

- $R^1$ ein $C_2$-$C_6$-Alkylrest oder ein $C_7$-$C_{18}$-Alkylrest, vorzugsweise ein Propylrest oder ein Octylrest ist, mit der Maßgabe, dass das Organosilxan (A) als Reste $R^1$ sowohl $C_2$-$C_6$-Alkylreste als auch $C_7$-$C_{18}$-Alkylreste, vorzugsweise sowohl Propylreste als auch Octylreste enthält;
- $R^2$ ein $C_1$-$C_4$-Alkylrest, vorzugsweise Ethylrest, oder ein Wasserstoffatom oder ein Rest der Formel $-[YO]_nZ$ ist, wobei
  Y ein $C_2$-$C_{10}$-Alkylenrest, vorzugsweise ein $C_2$-$C_5$-Alkylenrest ist,
  n eine ganze Zahl von 1 bis 10, vorzugsweise 1 ist, und
  Z ein Wasserstoffatom oder eine Bindung zu einem Siliziumatom ist;
- $R^3$ ein $C_1$-$C_4$-Alkylrest, vorzugsweise ein Methylrest ist;
- a 0, 1 oder 2 ist;

b 0 oder 1, vorzugsweise 0 ist.

Dabei ist es insbesondere bevorzugt, dass im Falle des Rests $R^1$ der Propylrest ein n-Propylrest ist und der Octylrest ein n-Octylrest ist. Es ist ebenfalls bevorzugt das $R^2$ kein Wasserstoffatom ist.

Es ist bevorzugt, dass eine Einheit der Formel (I), die einen $C_2$-$C_6$-Alkylrest trägt, mit mindestens einer weiteren Einheit, die einen $C_2$-$C_6$-Alkylrest trägt, benachbart ist. Es ist also weiter bevorzugt, dass eine Einheit der Formel (I), die einen Propylrest, insbesondere n-Propylrest, trägt, mit mindestens einer weiteren Einheit, die einen Propylrest, insbesondere n-Propylrest, trägt, benachbart ist. Das Organosiloxan (A) weist also vorzugsweise Blöcke von Einheiten der Formel (I), die einen $C_2$-$C_6$-Alkylrest, vorzugsweise Propylrest, insbesondere n-Propylresten tragen, auf. Es weiterhin bevorzugt, dass diese Blöcke 2 bis 20, vorzugsweise 2 bis 10, weiter bevorzugt 2 bis 6, insbesondere 2 bis 4 Siliziumatome umfassen. Es ist also bevorzugt, dass das Organosiloxan (A) Blöcke aus 2 bis 20, vorzugsweise 2 bis 10, weiter bevorzugt 2 bis 6, insbesondere 2 bis 4 Einheiten der Formel (I), die einen $C_2$-$C_6$-Alkylrest, vorzugsweise Propylrest, insbesondere n-Propylresten tragen, aufweist.

Z ist in der oben genannten Formel $-[YO]_nZ$ ein Wasserstoffatom oder eine Bindung zu einem Siliziumatom. Unter "Bindung" ist dabei eine kovalente Bindung in Form einer Einfachbindung ($\sigma$-Bindung) zu verstehen. Für den Fall, dass Z eine Bindung zu einem Siliziumatom ist, ist Z also eine kovalente Bindung in Form einer Einfachbindung ($\sigma$-Bindung). In der oben genannten Formel $-[YO]_nZ$ ist Z also ein Wasserstoffatom oder eine Einfachbindung ($\sigma$-Bindung) zu einem Siliziumatom.

Es ist von Vorteil, dass das Organosiloxan (A) bezogen auf die Gesamtzahl der Einheiten der Formel (I) und (II) mindestens 50 mol%, vorzugsweise mindestens 60 mol%, insbesondere mindestens 70 mol% Einheiten der Formel (I) und maximal 50 mol%, vorzugsweise maximal 40 mol%, insbesondere maximal 30 mol% Einheiten der Formel (II) enthält oder daraus besteht.

Es ist außerdem bevorzugt, dass die Viskosität des Organosiloxans (A) von 1 bis 100 mPa·s, bevorzugt 10 bis 50 mPa·s, insbesondere von 20 bis 40 mPa·s beträgt. Die Viskosität wird dabei vorzugsweise gemäß der Norm DIN 53015 (Ausgabedatum Juni 2019) bestimmt, wie in den Beispielen beschrieben.

Es ist weiterhin bevorzugt, dass das zahlenmittlere Molekulargewicht (Mn) des Organosiloxans (A) von 500 bis 2500 g/mol, bevorzugt von 700 bis 1800 g/mol, insbesondere von 900 bis 1200 g/mol beträgt. Es ist außerdem bevorzugt, dass das gewichtsmittlere Molekulargewicht (Mw) des Organosiloxans (A) von 600 bis 3000 g/mol, bevorzugt von 800 bis 2200 g/mol, insbesondere von 1000 bis 1500 g/mol beträgt. Das zahlenmittlere Molekulargewicht (Mn) und das gewichtsmittlere Molekulargewicht (Mw) werden vorzugsweise mit GPC gegen einen Polystyrol-Standard bestimmt, wie in den Beispielen beschrieben.

Es ist bevorzugt, dass das Organosiloxan (A) in Massenanteilen bezogen auf seine Gesamtmasse

- 20% bis 80%, vorzugsweise 30% bis 70%, insbesondere 40% bis 60% SiC-gebundene $C_2$-$C_6$-Alkylreste und
- 30% bis 40%, vorzugsweise 25% bis 35%, insbesondere 20% bis 30% SiC-gebundene $C_7$-$C_{18}$-Alkylreste enthält.

Es ist weiterhin bevorzugt, dass das Massenverhältnis aller SiC-gebundenen $C_2$-$C_6$-Alkylreste zu allen SiC-gebundenen $C_7$-$C_{18}$-Alkylresten von 5:1 bis 1:5, vorzugsweise von 3:1 bis 1:3, insbesondere von 2:1 bis 1:1 beträgt.

Es ist bevorzugt, das Organosiloxan (A) gemäß einem Verfahren herzustellen, bei dem eine Reaktionsmischung aus

i. mindestens einem $C_2$-$C_6$-Alkylalkoxysilan und/oder mindestens einem $C_2$-$C_6$-Alkylalkoxysiloxan, vorzugsweise mindestens einem $C_2$-$C_6$-Alkylalkoxysiloxan, insbesondere einem Propyltriethoxysilan-Oligomeren-Gemisch,
ii. mindestens einem $C_7$-$C_{18}$-Alkylalkoxysilan und/oder mindestens einem $C_7$-$C_{18}$-Alkylalkoxysiloxan, vorzugsweise mindestens einem $C_7$-$C_{18}$-Alkylalkoxysilan, insbesondere Octyltriethoxysilan,
iii. Wasser,
iv. vorzugsweise mindestens einem mono- oder polyfunktionellen $C_2$-$C_{10}$-Alkohol,
v. vorzugsweise mindestens einem cyclischen Dimethylsiloxan,
vi. vorzugsweise mindestens einem Tetraalkylammoniumhydroxid, insbesondere Tetrabutylammoniumhydroxid,
vii. vorzugsweise mindestens einer Supersäure, insbesondere Trifluormethansulfonsäure,
viii. und gegebenenfalls weiteren Stoffen

umgesetzt wird.

Es ist weiterhin bevorzugt, das Organosiloxan (A) gemäß einem Verfahren herzustellen, bei dem eine Reaktionsmischung aus

i. mindestens einem $C_2$-$C_6$-Alkylalkoxysilan und/oder mindestens einem $C_2$-$C_6$-Alkylalkoxysiloxan, vorzugsweise mindestens einem $C_2$-$C_6$-Alkylalkoxysiloxan, insbesondere einem Propyltriethoxysilan-Oligomeren-Gemisch,

ii. mindestens einem $C_7$-$C_{18}$-Alkylalkoxysilan und/oder mindestens einem $C_7$-$C_{18}$-Alkylalkoxysiloxan, vorzugsweise mindestens einem $C_7$-$C_{18}$-Alkylalkoxysilan, insbesondere Octyltriethoxysilan,
iii. Wasser,
iv. vorzugsweise mindestens einem mono- oder polyfunktionellen $C_2$-$C_{10}$-Alkohol,
v. vorzugsweise mindestens einem cyclischen Dimethylsiloxan,
vi. vorzugsweise Tetrabutylammoniumhydroxid,
vii. vorzugsweise Trifluormethansulfonsäure,
viii. und gegebenenfalls weiteren Stoffen

umgesetzt wird.

Es ist dabei bevorzugt, dass die Umsetzung der vorgenannten Edukte zum Organosiloxan (A) in Gegenwart von mindestens einem Tetraalkylammoniumhydroxid und mindestens einer Supersäure und ihren Umsetzungsprodukten als Katalysator stattfindet.

Es ist also bevorzugt, das Organosiloxan (A) gemäß einem Verfahren herzustellen, bei dem eine Reaktionsmischung aus

i. mindestens einem $C_2$-$C_6$-Alkylalkoxysilan und/oder mindestens einem $C_2$-$C_6$-Alkylalkoxysiloxan, vorzugsweise mindestens einem $C_2$-$C_6$-Alkylalkoxysiloxan, insbesondere einem Propyltriethoxysilan-Oligomeren-Gemisch,
ii. mindestens einem $C_7$-$C_{18}$-Alkylalkoxysilan und/oder mindestens einem $C_7$-$C_{18}$-Alkylalkoxysiloxan, vorzugsweise mindestens einem $C_7$-$C_{18}$-Alkylalkoxysilan, insbesondere Octyltriethoxysilan,
iii. Wasser,
iv. vorzugsweise mindestens einem mono- oder polyfunktionellen $C_2$-$C_{10}$-Alkohol,
v. vorzugsweise mindestens einem cyclischen Dimethylsiloxan,
vi. mindestens einem Tetraalkylammoniumhydroxid, vorzugsweise Tetrabutylammoniumhydroxid,
vii. mindestens einer Supersäure, vorzugsweise Trifluormethansulfonsäure,
viii. und gegebenenfalls weiteren Stoffen

umgesetzt wird.

Es ist dabei besonders bevorzugt, dass die Umsetzung der vorgenannten Edukte zum Organosiloxan (A) in Gegenwart von Tetrabutylammoniumhydroxid und Trifluormethansulfonsäure und ihren Umsetzungsprodukten als Katalysator stattfindet.

Es ist also besonders bevorzugt, das Organosiloxan (A) gemäß einem Verfahren herzustellen, bei dem eine Reaktionsmischung aus

i. mindestens einem $C_2$-$C_6$-Alkylalkoxysilan und/oder mindestens einem $C_2$-$C_6$-Alkylalkoxysiloxan, vorzugsweise mindestens einem $C_2$-$C_6$-Alkylalkoxysiloxan, insbesondere einem Propyltriethoxysilan-Oligomeren-Gemisch,
ii. mindestens einem $C_7$-$C_{18}$-Alkylalkoxysilan und/oder mindestens einem $C_7$-$C_{18}$-Alkylalkoxysiloxan, vorzugsweise mindestens einem $C_7$-$C_{18}$-Alkylalkoxysilan, insbesondere Octyltriethoxysilan,
iii. Wasser,
iv. vorzugsweise mindestens einem mono- oder polyfunktionellen $C_2$-$C_{10}$-Alkohol,
v. vorzugsweise mindestens einem cyclischen Dimethylsiloxan,
vi. Tetrabutylammoniumhydroxid,
vii. Trifluormethansulfonsäure,
viii. und gegebenenfalls weiteren Stoffen

umgesetzt wird.

Ein weiterer Gegenstand der Erfindung ist daher auch ein Verfahren zur Herstellung von Organosiloxanen (A), vorzugsweise zur Herstellung der erfindungsgemäßen Zusammensetzung, umfassend einen Verfahrensschritt, bei dem eine Reaktionsmischung aus

i. mindestens einem $C_2$-$C_6$-Alkylalkoxysilan und/oder mindestens einem $C_2$-$C_6$-Alkylalkoxysiloxan, vorzugsweise mindestens einem $C_2$-$C_6$-Alkylalkoxysiloxan, insbesondere einem Propyltriethoxysilan-Oligomeren-Gemisch,
ii. mindestens einem $C_7$-$C_{18}$-Alkylalkoxysilan und/oder mindestens einem $C_7$-$C_{18}$-Alkylalkoxysiloxan, vorzugsweise mindestens einem $C_7$-$C_{18}$-Alkylalkoxysilan, insbesondere Octyltriethoxysilan,
iii. Wasser,
iv. vorzugsweise mindestens einem mono- oder polyfunktionellen $C_2$-$C_{10}$-Alkohol,
v. vorzugsweise mindestens einem cyclischen Dimethylsiloxan,
vi. mindestens einem Tetraalkylammoniumhydroxid, vorzugsweise Tetrabutylammoniumhydroxid,

vii. mindestens einer Supersäure, vorzugsweise Trifluormethansulfonsäure,
viii. und gegebenenfalls weiteren Stoffen

umgesetzt wird.

Bevorzugt ist entsprechend ein Verfahren zur Herstellung von Organosiloxanen (A), vorzugsweise zur Herstellung der erfindungsgemäßen Zusammensetzung, umfassend einen Verfahrensschritt, bei dem eine Reaktionsmischung aus

i. mindestens einem $C_2$-$C_6$-Alkylalkoxysilan und/oder mindestens einem $C_2$-$C_6$-Alkylalkoxysiloxan, vorzugsweise mindestens einem $C_2$-$C_6$-Alkylalkoxysiloxan, insbesondere einem Propyltriethoxysilan-Oligomeren-Gemisch,
ii. mindestens einem $C_7$-$C_{18}$-Alkylalkoxysilan und/oder mindestens einem $C_7$-$C_{18}$-Alkylalkoxysiloxan, vorzugsweise mindestens einem $C_7$-$C_{18}$-Alkylalkoxysilan, insbesondere Octyltriethoxysilan,
iii. Wasser,
iv. vorzugsweise mindestens einem mono- oder polyfunktionellen $C_2$-$C_{10}$-Alkohol,
v. vorzugsweise mindestens einem cyclischen Dimethylsiloxan,
vi. Tetrabutylammoniumhydroxid,
vii. Trifluormethansulfonsäure,
viii. und gegebenenfalls weiteren Stoffen

umgesetzt wird.

Die Reaktionsmischung ist durch Mischen der vorgenannten Komponenten i. bis viii. herstellbar. Vorzugsweise wird die Reaktionsmischung hergestellt aus

- 100 Gewichtsteilen der Komponente i.,
- 40 bis 90, vorzugsweise 60 bis 70 Gewichtsteile der Komponente ii.,
- 5 bis 35, vorzugsweise 10 bis 20 Gewichtsteile der Komponente iii.,
- 0 bis 10, vorzugsweise 1 bis 5 Gewichtsteile der Komponente iv.,
- 5 bis 35, vorzugsweise 10 bis 20 Gewichtsteile der Komponente v.,
- $1{,}0 \cdot 10^{-4}$ bis $1{,}0 \cdot 10^{-2}$, vorzugsweise $1{,}0 \cdot 10^{-3}$ bis $3{,}0 \cdot 10^{-3}$ Gewichtsteile der Komponente vi.,
- $1 \cdot 10^{-4}$ bis $5 \cdot 10^{-3}$, vorzugsweise $5 \cdot 10^{-4}$ bis $1{,}5 \cdot 10^{-3}$ Gewichtsteile der Komponente vii., und
- 0 bis 20, vorzugsweise 0 bis 10 Gewichtsteile der Komponente viii.

Bei den Alkoxygruppen der vorgenannten Alkylalkoxysilane und Alkylalkoxysiloxane handelt es sich vorzugsweise um $C_1$-$C_4$-Alkoxygruppen, also Alkoxygruppen mit 1 bis 4 Kohlenstoffatomen. Vorzugsweise handelt es sich also um Methoxy-, Ethoxy-, Propoxy- und/oder Butoxygruppen, insbesondere aber Ethoxygruppen. Bei der Herstellung des Organosiloxans (A) werden die Alkoxygruppen teilweise oder vollständig zu den entsprechenden Alkoholen umgesetzt. Ethoxygruppen haben gegenüber Methoxy-, Propoxy- oder Butoxygruppen dabei den Vorteil, dass das bei der Umsetzung entstehende Ethanol im Gegensatz zu Methanol nicht toxisch ist und im Gegensatz zu Propanol und Butanol aufgrund des geringeren Siedepunkts leichter entfernt werden kann.

Unter $C_x$-$C_y$-Alkylalkoxysilanen sind hier solche Alkylalkoxysilane zu verstehen, die SiC-gebundene Alkylreste mit x bis y Kohlenstoffatomen aufweisen. Die $C_x$-$C_y$-Alkylalkoxysilane sind ausgewählt aus der Gruppe bestehend aus $C_x$-$C_y$-Alkyltrialkoxysilanen, $C_x$-$C_y$-Dialkyldialkoxysilanen und $C_x$-$C_y$-Trialkylalkoxysilanen, vorzugsweise aus der Gruppe bestehend aus $C_x$-$C_y$-Alkyltrialkoxysilanen und $C_x$-$C_y$-Dialkyldialkoxysilanen, insbesondere aus der Gruppe bestehend aus der $C_x$-$C_y$-Alkyltrialkoxysilanen.

Unter $C_x$-$C_y$-Alkylalkoxysiloxanen sind hier solche Alkylalkoxysiloxane zu verstehen, die SiC-gebundene Alkylreste mit x bis y Kohlenstoffatomen aufweisen. Es handelt sich dabei um Oligomere oder Polymere handeln, vorzugsweise um Oligomere mit 2 bis 20, vorzugsweise 2 bis 10, weiter bevorzugt 2 bis 6, insbesondere 2 bis 4 Siliziumatomen. Bevorzugte $C_x$-$C_y$-Alkylalkoxysiloxane sind also $C_x$-$C_y$-Alkylalkoxysiloxane mit 2 bis 20, vorzugsweise 2 bis 10, weiter bevorzugt 2 bis 6, insbesondere 2 bis 4 Siliziumatomen. $C_x$-$C_y$-Alkylalkoxysiloxane können aus $C_x$-$C_y$-Alkylalkoxysilanen durch eine kombinierte Hydrolyse- und Kondensationsreaktion (im Folgenden auch kurz als Kondensation bezeichnet) herstellbar. Dabei werden die am Silizium gebundenen Alkoxygruppen (≡Si-OR) mit Wasser unter Freisetzung von Alkohol (R-OH) zu Silanolgruppen (≡Si-OH) umgesetzt (Hydrolyse), welche anschließend unter Freisetzung von Wasser wiederum zu Siloxangruppen (=Si-O-Si=) umgesetzt werden (Kondensation). Das freigesetzte Wasser kann dann wieder mit weiteren Alkoxysilangruppen reagieren und so fort, bis das Wasser schließlich vollständig verbraucht ist. Die vollständige Umsetzung kann erreicht werden, indem der freigesetzte Alkohol destillativ entfernt wird. Diese Verfahren zur Herstellung von Alkylalkoxysiloxanen sind dem Fachmann bekannt. Sie werden beispielsweise in EP 0 814 110 A1, EP 1 205 481 A2, EP 1 205 505 und EP 1 982 964 A1 beschrieben. Die zur Herstellung des Organosiloxans (A) vorzugsweise eingesetzten Propylethoxysilan-Oligomere (insbesondere Propyltriethoxysilan-Oligomere) bzw. Propylethoxysilan-Oligomeren-Gemische (insbesondere Propyltriethoxysilan-Oligomeren-Gemische), also Oligomere oder Gemische von Oligomeren hergestellt aus Propylethoxysilanen (insbesondere Propyltriethoxysilan) als Monomere, werden vorzugsweise wie in EP 0 814 110 A1, EP 1 205 481 A2, EP 1 205 505 A2 beschrieben hergestellt. Gemische von Alkylalkoxysiloxanen, insbesondere Propylethoxysilan-Oligomeren-Gemische sind kommerziell erhältlich wie z.B. Protectosil® 266 von Evonik Operations GmbH.

Noch bevorzugter wird als Komponente i. mindestens ein n-Propylalkoxysiloxan und/oder mindestens ein i-Propylalkoxysiloxan und als Komponente ii. mindestens ein n-Octylalkoxysilan und/oder mindestens ein i-Octylalkoxysilan eingesetzt. Noch bevorzugter wird als Komponente i. mindestens ein n-Propylalkoxysiloxan und als Komponente ii. n-Octyltriethoxysilan eingesetzt.

Als Komponente i sind dabei insbesondere Propylethoxysilan-Oligomeren-Gemische bevorzugt, die Oligomere der Formel (III)

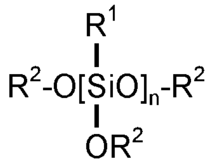

,

enthalten und $R^1$ jeweils unabhängig voneinander ein n-Propyl-Rest oder ein i-Propyl-Rest ist, vorzugsweise ein n-Propylrest, $R^2$ ein Ethylrest ist und der Index n von 2 bis 20, vorzugsweise von 2 bis 10, weiter bevorzugt 2 bis 6, insbesondere von 2 bis 4 beträgt. Der Index n stellt dabei den Oligomerisierungsgrad dar.

Als Komponente iv. der Reaktionsmischung werden mono- oder polyfunktionellen $C_2$-$C_{10}$-Alkohol eingesetzt, vorzugsweise difunktionelle $C_2$-$C_{10}$-Alkohole. Beispiele sind Ethylenglykol (Ethandiol), Propylenglykole (Propandiole), Butylenglykole (Butandiole) und Pentylenglykole (Pentandiole).

Als Komponente v. der Reaktionsmischung werden cyclische Dimethylsiloxane eingesetzt, vorzugsweise Octamethylcyclotetrasiloxan (D4), Decamethylcyclopentasiloxan (D5) oder beliebige großtechnisch verfügbare Gemische ebendieser.

Als Komponente vi. der Reaktionsmischung wird mindestens ein Tetraalkylammoniumhydroxid eingesetzt. Es ist dabei bevorzugt, dass die Alkylreste des Tetraalkylammoniumhydroxid ausgewählt sind aus $C_1$-$C_{10}$-Alkylresten. Diese Alkylreste können dabei gleich oder verschieden sein, vorzugsweise sind sie aber gleich. Diese Alkylreste können weiterhin linear oder verzweigt sein, vorzugsweise sind sie linear. Ein besonders bevorzugtes Tetraalkylammoniumhydroxid ist Tetrabutylammoniumhydroxid, wobei es sich bei Butyl dabei um n-Butyl handelt.

Als Komponente vii. der Reaktionsmischung wird vorzugsweise mindestens eine Supersäure, insbesondere Trifluormethansulfonsäure eingesetzt.

Die Organosiloxane (A) lassen sich aus den vorgenannten Alkylalkoxysilanen und/oder Alkylalkoxysiloxanen sowie Wasser über eine Hydrolyse- und Kondensationsreaktion unter Freisetzung von Alkohol herstellen. Die Hydrolyse- und Kondensationsreaktion erfolgt wie oben beschrieben. Dabei werden die am Silizium gebundenen Alkoxygruppen (≡Si-OR) mit Wasser unter Freisetzung von Alkohol (R-OH) zu Silanolgruppen (≡Si-OH) umgesetzt (Hydrolyse), welche anschließend unter Freisetzung von Wasser wiederum zu Siloxangruppen (≡Si-O-Si≡) umgesetzt werden (Kondensation). Das freigesetzte Wasser kann im Anschluss wieder erneut mit Alkoxysilangruppen reagieren usw., bis das Wasser vollständig verbraucht ist. Allerdings ist auch eine Reaktion des freigesetzten Alkohols mit Silanolgruppen unter Bildung von Wasser möglich. Die vollständige Umsetzung lässt sich daher beispielsweise dadurch erreichen, dass der freigesetzte Alkohol destillativ entfernt wird. Die gegebenenfalls eingesetzten mono- oder polyfunktionellen $C_2$-$C_{10}$-Alkohole können ebenfalls mit Silanolgruppen reagieren. Parallel zur Hydrolyse- und Kondensationsreaktion findet auch eine Equilibrierung der cyclischen Dimethylsiloxane statt, bei der die Cyclen ringgeöffnet werden und mit den im Reaktionssystem vorhandenen Siloxangruppen (≡Si-O-Si≡) reagieren ("einequilibrieren") und längerkettige Siloxanketten bilden. Die Reaktion wird vorzugsweise solange durchgeführt bis sich das Equilibriergleichgewicht eingestellt hat.

Die Umsetzung findet vorzugsweise in Gegenwart von Katalysatoren statt. Als saure Katalysatoren eignen sich die aus dem Stand der Technik bekannten starken Säuren (Equilibriersäuren) für Siloxane, also Mineralsäuren, wie beispielsweise Schwefelsäure, aber auch Sulfonsäuren und Perfluoralkansulfonsäuren, saure Tonerden oder saure Ionenaustauscherharze, wie beispielsweise die unter den Markennamen Amberlite®, Amberlyst® oder Dowex® und Lewatit® bekannten Produkte. Bevorzugt sind dabei Supersäuren. Unter Supersäuren werden Säuren bezeichnet, die stärker als konzentrierte (100-prozentige) Schwefelsäure ($H_2SO_4$: pKs-Wert = -3,0) sind. Beispiele für Supersäuren sind, ohne darauf beschränkt zu sein, Perchlorsäure ($HClO_4$), Fluorsulfonsäure ($HSO_3F$), Fluor-Antimonsäure ($HSbF_6$), die "magische" Säure (eine Mischung aus Fluorsulfonsäure und Antimon(V)-fluorid ($SbF_5$)) sowie Trifluormethansulfonsäure. Besonders bevorzugt ist hierbei Trifluormethansulfonsäure. Beispiele für geeignete Katalysatoren sind insbesondere Trifluormethansulfonsäure, Methansulfonsäure, p-Toluolsulfonsäure und Trifluoressigsäure. Besonders bevorzugt ist Trifluormethansulfonsäure. Beispiele für geeignete Katalysatoren können also auch Säuren umfassen, die keine

Supersäuren sind. Ausführliche Zusammenstellungen der pKs-Werte von Brønsted-Säuren findet man in der Literatur und können dieser entnommen werden, z.B. *CRC Handbook of Chemistry and Physics 99th edition.* Zur Bestimmung des pKs-Werts stehen außerdem die dem Fachmann bekannten Methoden zur Verfügung. Abseits von eventuell abweichend referenzierten pKs-Werten erweist sich die potentiometrische Titration als eine besonders geeignete Methode zur exakten Bestimmung von pKs-Werten im Sinne der vorliegenden Erfindung. Diese Methode ist lange etabliert, vgl. z.B. Benet L.Z., Goyan J.E.: Potentiometric determination of dissociation constants; J. Pharm. Sci. 56, 665-680 (1967).

Das erfindungsgemäße Verfahren zur Herstellung von Organosiloxanen (A) zeichnet sich dadurch aus, dass es einstufig durchgeführt wird. Alkoxyalkylsilane (auch als Alkylalkoxysilane bezeichnet) und/oder Alkoxyalkylsiloxane (auch als Alkylalkoxysiloxane bezeichnet), Wasser sowie vorzugsweise organische Mono- und Diole und/oder vorzugsweise cyclische Dimethylsiloxane werden dabei vorgelegt. Im erfindungsgemäßen Verfahren wird neben dem saueren Katalysator (Trifluormethansulfonsäure) noch ein basischer Katalysator (Tetrabutylammoniumhydroxid) eingesetzt. Beide Katalysatoren sind etablierte Katalysatoren für die Equilibrierung von Polysiloxanen, wobei sie auch die Kondensation katalytisch fördern. Der basische Katalysator fördert die Alkoholyse wohingegen der saure Katalysator bevorzugt die Kondensation katalysiert. Die Equilibrierung und die Kondensation verlaufen also gleichzeitig. Es ist dabei insbesondere vorteilhaft, dass Tetrabutylammoniumhydroxid und Trifluormethansulfonsäure in einem Massenverhältnis von 1,5:1 bis 3:1 eingesetzt werden.

Es ist weiterhin bevorzugt, dass die Herstellung des Organosiloxans (A) aus der Reaktionsmischung bei einer Temperatur von 40°C bis 150°C, vorzugsweise von 70°C bis 120°C, über einen Zeitraum von einer bis 8 Stunden, vorzugsweise über einen Zeitraum von 3 bis 6 Stunden, durchgeführt wird. Vorzugsweise wird die Umsetzung bei einem Druck von 1 mbar bis 1013 mbar durchgeführt.

Es ist außerdem bevorzugt aus dem Umsetzungsprodukts im Anschluss bei 80°C bis 120°C, vorzugsweise 90°C bis 110°C, bei Normaldruck oder Unterdruck flüchtige Bestandteile zu entfernen, bis im Wesentlichen kein Destillat mehr anfällt.

Es ist weiterhin bevorzugt, im Umsetzungsprodukt gegebenenfalls noch enthaltene Säuren zu entfernen. Es ist daher bevorzugt, dass die im Umsetzungsprodukt gegebenenfalls enthaltenen Säuren bei einer Temperatur von 20°C bis 110°C, bevorzugt von 40°C bis 80°C, durch Hinzufügen einer festen, flüssigen oder gasförmigen Base neutralisiert werden, wobei die Verwendung einer festen Base insbesondere in Form von Carbonaten und/oder Hydrogencarbonaten der Alkali- und/oder der Erdalkalielemente und/oder des Ammoniums oder die Verwendung von flüssigen Basen, hierbei bevorzugt von aliphatischen und/oder aromatischen und/oder alkylaromatischen Aminen, oder die Verwendung von Ammoniak als gasförmiger Base bevorzugt sind. Besonders bevorzugt wird Ammoniak. Vorzugsweise bemisst sich die Menge der zugegebenen festen, flüssigen oder gasförmigen Base an der Menge der im Reaktionsgemisch vorhandenen Säure(n). Bevorzugt wird die Base in stöchiometrischen Mengen eingesetzt. Zu große Überschüsse an Base sind insbesondere für ein im technischen Maßstab durchgeführtes Herstellverfahren unvorteilhaft, da der damit einhergehende Salzanfall den zu treibenden Filtrationsaufwand erhöht. Ebenfalls störend können sich große Mengen flüssiger, organischer Basen (Amine) sein, da diese im Produkt verbleiben können. Aromatische Amine können die Gesundheit gefährden und sich negativ auf die Produkteigenschaften auswirken können.

Das erhaltene Umsetzungsprodukt kann noch flüchtige Reaktions- und/oder Nebenprodukte und/oder Edukte enthalten. Es ist vorteilhaft, diese weitgehend zu entfernen. Es ist daher bevorzugt diese flüchtigen Bestandteile über eine Dauer von 1 bis 8 Stunden, bevorzugt 1 bis 4 Stunden, bei einer Temperatur von 80°C bis 140°C, bevorzugt von 100°C bis 130°C unter Anlegen eines Hilfsvakuums von weniger als 200 mbar, bevorzugt von weniger als 20 mbar, insbesondere von weniger als 10 mbar aus dem Umsetzungsprodukt zu entfernen oder ihren Anteil zu verringern.

Um das Umsetzungsprodukt zu reinigen, kann gegebenenfalls eine Filtration durchgeführt werden. Als Filterhilfsmittel können dabei beispielsweise Cellulose, Kieselgel, Kieselgur oder Perlit eingesetzt werden. Der Anteil an unerwünschten Substanzen oder Verunreinigungen im Umsetzungsprodukt kann zudem mittels Aktivkohle und/oder Bleicherden, wie beispielsweise Tonsil®, verringert werden.

Die erfindungsgemäße Zusammensetzung enthält neben den zuvor beschriebenen Organosiloxanen (A) mindestens einen Emulgator (B). Der Emulgator kann aus kationischen, anionischen, amphoteren (wie beispielsweise Ampholyte und Betaine) und nichtionischen Emulgatoren ausgewählt werden. Die Emulgatoren (B) unterscheiden sich von den Organosiloxanen (A) und, falls diese ebenfalls in der Zusammensetzung enthalten sind, von den Organosiloxanen (C).

Vorzugsweise enthält die erfindungsgemäße Zusammensetzung ein Emulgatorsystem aus zwei oder mehr Emulgatoren (B).

Geeignete Emulgatoren und Emulgatorsysteme sind dem Fachmann geläufig. Geeignete Emulgatoren bzw. Emulgatorsysteme sind beispielhaft ausgewählt aus Alkylsulfaten mit $C_8$-$C_{18}$-Alkyl, Alkyl- und Alkarylethersulfaten mit $C_8$-$C_{18}$-Alkyl im hydrophoben Rest und mit 1 bis 40 Ethylenoxid (EO)- bzw. Propylenoxid (PO)-Einheiten, Alkylsulfonate mit $C_8$-$C_{18}$-Alkyl, Natriumlaurylsulfat ($C_{12}$-$C_{16}$), Alkarylsulfonate mit $C_8$-$C_{18}$-Alkyl, Halbester der Sulfobernsteinsäure mit einwertigen Alkoholen oder Alkylphenolen mit 5 bis 15 Kohlenstoffatomen, Alkali- und Ammoniumsalze von Carbonsäuren mit 8 bis 20 Kohlenstoffatomen im Alkyl-, Aryl-, Alkaryl- oder Aralkylrest, Alkyl- und Alkarylphosphate mit 8 bis 20

Kohlenstoffatomen im organischen Rest, Alkylether- bzw. Alkaryletherphosphate mit 8 bis 20 Kohlenstoffatomen im Alkyl- bzw. Alkarylrest und 1 bis 40 EO-Einheiten, Alkylpolyglykolether und Alkarylpolyglykolether mit 8 bis 40 EO-Einheiten und 8 bis 20 Kohlenstoffatomen in den Alkyl- oder Alkarylresten, Ethylenoxid/Propylenoxid (EO/PO)-Blockcopolymer mit 8 bis 40 EO- bzw. PO-Einheiten, Additionsprodukte von Alkylaminen mit $C_8$-$C_{22}$-Alkylresten mit Ethylenoxid oder Propylenoxid, Alkylpolyglykoside mit linearen oder verzweigten gesättigten oder ungesättigten $C_8$-$C_{24}$-Alkylresten und Oligoglykosidresten mit 1 bis 10 Hexose- oder Pentoseeinheiten, siliciumfunktionelle Tenside oder Mischungen dieser Emulgatoren. Beispiele für siliciumhaltige Tenside sind solche der allgemeinen Formeln

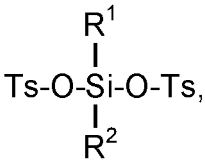,
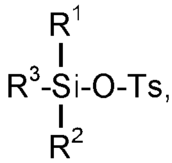,
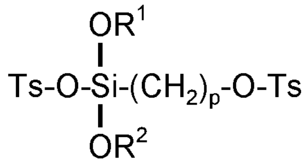,

in denen $R^1$ und $R^2$ gleich oder verschieden sind, lineares oder verzweigtes $C_1$-$C_{20}$-Alkyl, vorzugsweise $C_1$-$C_{10}$-Alkyl, Phenyl ist, $R^3$ ist $C_1$-$C_{10}$-Alkyl, p ist eine ganze Zahl von 0 bis 3 und Ts ein Tensidrest ist ausgewählt aus

$-(CH_2CH_2\text{-}O)_n\text{-}R^4$, 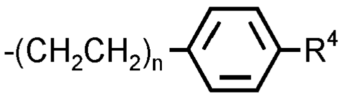 ,

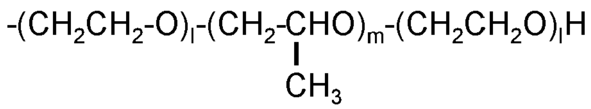 ,

in denen n eine ganze Zahl von 3 bis 15, m eine ganze Zahl von 3 bis 50 und l eine ganze Zahl von 3 bis 25 ist, $R^4$ H, $C_1$-$C_{20}$-Alkyl, $C_2$-$C_{36}$-Alkenyl, $C_5$-$C_8$-Cycloalkyl, $C_7$-$C_{36}$-Aralkyl ist.

Geeignet ist beispielsweise eine Kombination von Alkylsulfaten mit $C_8$-$C_{18}$-Alkylresten, beispielsweise von Laurylsulfaten, und siliciumfunktionellen Tensiden der Formel

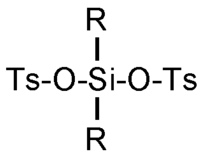 ,

in der R Methyl, Ethyl, Methoxy oder Ethoxy ist und der Tensidrest

$-(CH_2CH_2\text{-}O)_{10}C_{13}H_{27}$

oder

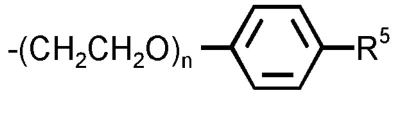

ist, wobei in der Formel n eine ganze Zahl von 5 bis 15 ist und $R^5$ ein lineare oder verzweigter $C_6$-$C_{10}$-Alkylrest ist. Besonders geeignet ist ein Tensid der vorstehenden Formeln in denen R = $CH_3$, n = 1 bis 30 und $R^5$ = Isononyl sind.

Vorzugsweise handelt es sich bei den eingesetzten Emulgatoren (B) aber nicht um Siliziumverbindungen. Die Emulgatoren (B) weisen also vorzugsweise keine Siliziumatome auf.

Es ist weiterhin bevorzugt, dass der Emulgator (B) ein nichtionischer Emulgator, vorzugsweise ein alkoxylierter Alkohol oder eine alkoxylierte Carbonsäure, insbesondere ein alkoxylierter Alkohol ist. Es ist insbesondere bevorzugt, dass zwei oder mehr Emulgatoren (B) eingesetzt werden, insbesondere zwei oder mehr alkoxylierte Alkohole.

Vorzugsweise ist der Emulgator (B) eine Verbindung der Formel (IV),

$R^4O\text{-}[(C_2H_3R^5)\text{-}O]_n\text{-}H$ Formel (IV),

wobei

- $R^4$ ein einbindiger aliphatischer Rest mit 4 bis 30, vorzugsweise 8 bis 20, insbesondere 11 bis 15 Kohlenstoffatomen ist;
- $R^5$ jeweils unabhängig voneinander ein Wasserstoffatom oder ein $C_1$-$C_6$-Alkylrest, vorzugsweise ein Wasserstoffatom oder Methylrest, insbesondere ein Wasserstoffatom ist;
- n eine Zahl von 1 bis 300, vorzugsweise von 2 bis 100, insbesondere von 3 bis 40 ist.

Die Verbindung der Formel (IV) ist also ein alkoxylierter Alkohol.

Ebenfalls bevorzugt ist der Emulgator (B) eine Verbindung der Formel (V),

$$R^4(CO)O\text{-}[(C_2H_3R^5)\text{-}O]_n\text{-}H \qquad \text{Formel (V),}$$

wobei

- $R^4$ ein einbindiger aliphatischer Rest mit 4 bis 30, vorzugsweise 8 bis 20, insbesondere 11 bis 15 Kohlenstoffatomen ist;
- $R^5$ jeweils unabhängig voneinander ein Wasserstoffatom oder ein $C_1$-$C_6$-Alkylrest, vorzugsweise ein Wasserstoffatom oder Methylrest, insbesondere ein Wasserstoffatom ist;
- n eine Zahl von 1 bis 300, vorzugsweise von 2 bis 100, insbesondere von 3 bis 40 ist.

Die Verbindung der Formel (V) ist also eine alkoxylierte Carbonsäure.

Die Verbindung der Formel (IV) bzw. (V) weist eine oder mehrere zweibindige Gruppen -[($C_2H_3R^5$)-O]- auf. Bei den zweibindigen Gruppen -[($C_2H_3R^5$)-O]- handelt es sich um Alkylenoxygruppen. Ist $R^5$ ein Wasserstoffatom, also für den Fall, dass $R^5$ = H gilt, handelt es sich bei der Gruppe -[($C_2H_3R^5$)-O]- um eine Gruppe -[($C_2H_4$)-O]-, also um eine Gruppe -($CH_2$-$CH_2$-O)-, also um eine Ethylenoxygruppe. Ist $R^5$ ein $C_1$-$C_4$-Alkylrest, kann die Alkylenoxygruppe jeweils unabhängig voneinander in den räumlichen Orientierungen -($CH_2$-CH($R^5$)-O)- oder -(CH($R^5$)-$CH_2$-O)-, vorzugsweise aber in der räumlichen Orientierung -($CH_2$-CH($R^5$)-O)-, in der Verbindung der Formel (IV) bzw. (V) vorliegen, wobei die für die Verbindung der Formel (IV) bzw. (V) die in Formel (IV) bzw. (V) gewählte räumliche Orientierung zu Grunde zu legen ist, also eine räumliche Orientierung bei der die $R^4$O-Gruppe am linken Ende und die OH-Gruppe am rechten Ende der Verbindung der Formel (IV) bzw. (V) gebunden vorliegt.

$R^4$ kann beispielsweise linear oder verzweigt, cyclisch oder nicht-cyclisch, gesättigt oder ungesättigt sein. $R^4$ kann von einem primäreren, sekundären oder tertiären Alkohol abgeleitet sein. Vorzugsweise ist $R^4$ aber von einem sekundären Alkohol abgeleitet.

Die Hydrophobie/Hydrophilie des Emulgators (B), vorzugsweise der Verbindung der Formel (IV) bzw. (V), lässt sich gezielt einstellen, insbesondere um eine besonders lagerungsstabile und verdünnungsstabile Zusammensetzung zu erhalten. Im Falle von Verbindungen der Formel (IV) bzw. (V) lässt sich dies durch die Wahl der Reste $R^4$ und $R^5$ sowie des Index n, dem Alkoxylierungsgrad, erreichen. Es ist bevorzugt, dass der HLB-Wert des Emulgators (B), vorzugsweise der Verbindung der Formel (IV) bzw. (V), von 5 bis 20 vorzugsweise von 8 bis 18, insbesondere von 10 bis 16 beträgt. "HLB" steht für englisch *hydrophilic lipophilic balance*. Der HLB-Wert kann nach verschieden Methoden des Standes der Technik bestimmt werden und ist ein anerkanntes Maß für die Hydrophobie/Hydrophilie. Bevorzugt wird der HLB-Wert nach der Methode von Griffin bestimmt (W. C. Griffin: Classification of surface active agents by HLB, J. Soc. Cosmet. Chem. 1, 1949, S. 311-326). Dabei wird der HLB-Wert gemäß der Formel

$$\mathrm{HLB} = 20 \cdot \left(1 - \frac{m_l}{m}\right)$$

berechnet, wobei $m_l$ die Molmasse des lipophilen Anteils eines Moleküls und $m$ die Molmasse des gesamten Moleküls ist. Die Molmasse $m_h$ des hydrophilen Anteils eines Moleküls ergibt sich entsprechend nach $m_h = m - m_l$. Die Molmassen werden nach den Methoden des Standes der Technik bestimmt, bevorzugt werden sie massenspektrometrisch bestimmt, die Bestimmung des lipophilen Anteils bzw. des hydrophilen Anteils erfolgt ebenfalls bevorzugt aus den massenspektroskopischen Ergebnissen unter Anwendung der dem Fachmann bekannten stöchiometrischen Regeln. Die Molmassen können auch anhand der Molekülstruktur berechnet werden. Im Falle von Verbindungen der Formel (IV) bzw. (V) berechnet sich Masse des hydrophilen Anteils aus der Gesamtmasse aller Gruppen -[($C_2H_3R^5$)-O]- mit $R^5$ = H, also aus der Gesamtmasse aller enthaltenen Ethylenoxy-Gruppen (Oxyethylen-Gruppen).

Verfahren zur Herstellung von Verbindungen der Formel (IV) bzw. (V) sind ist dem Fachmann bekannt. Die Verbindungen der Formel (IV) bzw. (V) werden vorzugsweise durch Umsetzung von hydroxyfunktionellen Verbindungen

der Formel $R^4$-OH (also einem Alkohol), wobei $R^4$ wie in Formel (IV) definiert ist, bzw. $R^4$-(CO)-OH (also eine Carbonsäure), wobei $R^4$ wie in Formel (V) definiert ist, mit $C_2$-$C_8$-Alkylenoxiden, also Alkylenoxiden mit 2 bis 8 Kohlenstoffatomen, erhalten. Bei dieser Umsetzung handelt es sich um eine Alkoxylierungsreaktion von $R^4$-OH bzw. $R^4$-(CO)-OH mit $C_2$-$C_8$-Alkylenoxiden.

Bevorzugte Emulgatoren (B) sind dabei ethoxylierte Alkohole, die duch Umsetzung eines oder mehrerer sekundärer $C_4$-$C_{22}$-Alkohole mit 4 bis 22 Kohlenstoffatomen mit Ethylenoxid (EO) in einem molaren Verhältnis von 1:10 bis 1:20 erhalten werden. Unter einem $C_x$-$C_y$-Alkohol ist dabei ein Alkohol mit x bis y Kohlenstoffatomen zu verstehen. Besonders bevorzugt ist eine Emulgatormischung aus mindestens einem ethoxylierten sekundären $C_{11}$-$C_{15}$-Alkohol mit im Mittel 15 EO-Einheiten und mindestens einem ethoxylierten sekundären $C_{11}$-$C_{15}$-Alkoholen mit im Mittel 5 EO-Einheiten.

Emulgatoren (B), insbesondere solche der Formel (IV), sind kommerziell erhältlich, wie beispielsweise TERGITOL™ 15-S-3, TERGITOL™ 15-S-5, TERGITOL™ 15-S-7 TERGITOL™ 15-S-9 TERGITOL™ 15-S-12, TERGITOL™ 15-S-15 TERGITOL™ 15-S-20 TERGITOL™ 15-S-30 TERGITOL™ 15-S-40 der Firma The Dow Chemical Company.

Es ist bevorzugt, dass die erfindungsgemäße Zusammensetzung mindestens ein vom Organosiloxan (A) unterschiedliches Organosiloxan (C) enthält, vorzugsweise ein $\alpha,\omega$-Dihdroxy-Polydimethylsiloxan und/oder ein $\alpha,\omega$-Dimethyl-Polydimethylsiloxan und/oder ein Polyether-Polysiloxan-Copolymer (z.B. Polyether-Polydimethylsiloxan-Copolymer). Das Organosiloxan (C) unterscheidet sich zudem vom Emulgator (B). $\alpha,\omega$-Dihdroxy-Polydimethylsiloxane und $\alpha,\omega$-DimethylPolydimethylsiloxane und Polyether-Polysiloxan-Copolymere (z.B. Polyether-Polydimethylsiloxan-Copolymere) sind dem Fachmann bekannt. Sie verbessern die Hydrophobierung und den Abperleffekt von Baustoffen. Bei den $\alpha,\omega$-Dimethyl-Polydimethylsiloxanen und $\alpha,\omega$-Dihdroxy-Polydimethylsiloxanen handelt es sich vorzugsweise um Siliconöle. Geeignete Siliconöle oder Polyether-Polysiloxan-Copolymere (Polyether-Polydimethylsiloxan-Copolymere) sind kommerziell erhältlich, wie beispielsweise XIAMETER™ PMX-200 Silicone Fluid 1000 cSt (DOW SILICONES DEUTSCHLAND GMBH) oder TEGOPREN® 3110 (Evonik Operations GmbH). Unter Organosiloxane (C) sind keine Organsiloxane zu verstehen, die als Emulgatoren (B) eingesetzt werden.

Es ist außerdem bevorzugt, dass die erfindungsgemäße Zusammensetzung mindestens einen Zusatzstoff (D) enthält.

Die Zusammensetzung kann beispielsweise, ohne darauf beschränkt zu sein, Zusatzstoffe (D) (Hilfsstoffe) enthalten, ausgewählt aus anorganischen oder organischen Säuren, Fettsäuren, Basen, Puffersubstanzen, Fungiziden, Bakteriziden, Algiziden, Mikrobioziden, Geruchsstoffen, Korrosionsinhibitoren, Konservierungsmitteln, Rheologiehilfsmitteln, wie z. B. pyrogene Kieselsäure oder Bentonite, Abperlhilfsmittel, wie z. B. Wachse, Fluorpolymere, hydrophobe pyrogene Kieselsäuren, solche auf Basis von reaktiven Organosiloxanen, Siliconharze, Trisiloxane (z.B. TEGOPREN® 5840), Katalysatoren, wie z. B. organische Zinn- Titan- oder Zirkonverbindungen, wie Dibutylzinndilaurat, Titan- oder Zirkonalkoxide (z. B. Tetrabutyltitanat).

Bei den Zusatzstoffen (D) kann es sich besonders bevorzugt um pH-Regulatoren (Puffer) handeln, also um Verbindungen, die der Einstellung und//oder Pufferung des pH-Werts der Zusammensetzung dienen, wie beispielsweise $NaHCO_3$. Diese pH-Regulatoren können protoniert und/oder deprotoniert vorliegen.

Die Einstellung des gewünschten pH-Werts kann also durch Zugabe von Säure oder alkalischen Verbindungen oder durch gängige Puffersysteme, wie $NaHCO_3$, Natriumacetat/Essigsäure oder Alkaliphosphate, erfolgen und mittels üblicher Methoden, wie sie dem Fachmann bekannt sind, bestimmt werden, beispielsweise mittels pH-Papier oder pH-Stäbchen (Fa. Merck) oder pH-Elektrode. So weist eine erfindungsgemäß verwendete Emulsion bevorzugt einen pH-Wert von 8 bis 12 auf.

Bei den Zusatzstoffen (D) kann es sich weiterhin besonders bevorzugt um Konservierungsmittel (Biozide) handeln. Als Konservierungsmittel eignen sich beispielsweise Benzisothiazolinon (BIT), Chlormethylisothiazolinon (CIT) und Methylisothiazolinon (MIT), Octylisothiazolinon (OIT), Zink-Pyrithion. Geeignete Konservierungsmittel sind beispielsweise unter der Bezeichnung ACTICIDE® (Thor GmbH) erhältlich. Besonders geeignet sind dabei ACTICIDE® MV (Thor GmbH), ACTICIDE® B 20 (Thor GmbH) und ACTICIDE® MBS (Thor GmbH), ACTICIDE® BW 20 (Thor GmbH), ACTICIDE® M 20 (Thor GmbH), ACTICIDE® ICB 5 (Thor GmbH).

Die erfindungsgemäße Zusammensetzung enthält also Organosiloxane (A) und Emulgatoren (B) sowie gegebenenfalls Organosiloxane (C) und gegebenenfalls Zusatzstoffe (D). Organosiloxane (A), Emulgatoren (B), Organosiloxane(C), Zusatzstoffe (D) sind alle voneinander unterschiedlich. Für den Fall, dass eine Verbindung prinzipiell zwei oder mehr der vorgenannten Gruppen (A), (B), (C) und (D) zugeordnet werden kann, soll diese Verbindung derjenigen in Frage kommenden Gruppe zugeordnet werden, die gemäß der oben angegeben Reihenfolge zuerst genannt wird, sofern nicht explizit von dieser Regel abgewichen wird. Kann eine Verbindung also beispielsweise einer der Gruppen (B), (C) und (D) zugeordnet werden, so soll sie der erstgenannten der in Frage kommenden Gruppen, in diesem Beispiel also (B), zugeordnet werden. Eine Verbindung wird also nicht mehreren der Gruppen (A), (B), (C) und (D) zugeordnet. Um Missverständnisse zu vermeiden, sei zudem klargestellt, dass das in der erfindungsgemäßen Zusammensetzung ebenfalls enthaltene Wasser natürlich keiner der vorgenannten Gruppen (A), (B), (C) und (D) zugeordnet ist. Wasser wird also insbesondere auch nicht als Zusatzstoff (D) betrachtet.

Es ist bevorzugt, dass die erfindungsgemäße Zusammensetzung, jeweils bezogen auf die Gesamtmasse der Zusammensetzung, folgende Bestandteile enthält:

- ein oder mehrere Organosiloxane (A) in einem Massenanteil von 10% bis 80%, vorzugsweise von 20% bis 70%, insbesondere von 40% bis 60%,
- ein oder mehrere Emulgatoren (B) in einem Massenanteil von insgesamt 1,5% bis 15%, vorzugsweise von 2% bis 10%, insbesondere von 3% bis 6%,
- ein oder mehrere Organosiloxane (C) in einem Massenanteil von 0% bis 30%, vorzugsweise von 0% bis 20%, insbesondere von 0% bis 10%,
- ein oder mehrere Zusatzstoffe (D) in einem Massenanteil von 0% bis 25%, vorzugsweise von 0% bis 15%, insbesondere von 0% bis 10%, und
- Wasser in einem Massenanteil, sodass die Summe der Massenanteile aller Bestandteile 100% ergibt.

Die Zusammensetzung kann neben den Bestandteilen (A) bis (D) noch weitere Bestandteile enthalten, wie zum Beispiel Verunreinigungen. Unter "der Summe der Massenanteile aller Bestandteile" wird daher die Summe der Massenanteile der Bestanteile (A) bis (D) und der weiteren oben nicht aufgeführten Bestandteile verstanden.

Die erfindungsgemäße Zusammensetzung, vorzugsweise der Emulsion, insbesondere der Öl-in-Wasser-Emulsion, kann über verschiedene Verfahren hergestellt werden. Diese Verfahren sind dem Fachmann bekannt. Die Herstellung kann beispielsweise, aber nicht ausschließlich, durch Vormischen der Bestandteile und anschließendes Emulgieren erfolgen, wie beispielsweise in WO 2006/081891 A1, WO 2006/081892 A1, WO 2008/128819 A1 sowie EP 0 538 555 A1 beschrieben.

Für die Formulierung einer erfindungsgemäßen Zusammensetzung kommen insbesondere folgende Herstellverfahren zum Einsatz:

- Pastenverfahren, bei welchem Organsiliciumverbindungen in eine konzentrierte Zusammensetzung aus Emulgatoren und Wasser unter hohem Schereintrag eingebracht und im Anschluss mit Wasser weiter verdünnt werden;
- Homogenisationsverfahren, bei welchen Organsiliciumverbindungen, Emulgatoren, Wasser und Zusatzstoffe, wie z.B. pH-Regulatoren (Puffer) und Konservierungsmittel (Biozide) unter hohem Schereintrag über Homogenisationswerkzeuge (wie z.B. Kantspalthomogenisator, Kapillarhomogenisator, Rotor-Stator-Homogenisator, Rotor-Rotor-Homogenisator, Ultraschallbehandlung) emulgiert und stabilisiert werden.
- Inversionsverfahren, bei welchem die Organsiliciumverbindungen vorgelegt mit Emulgatoren versetzt und über eine invertierende Wasser-in-Öl-Phase zu einer Öl-in-Wasser-Formulierung mit Wasser verdünnt und stabilisiert werden.
- Kontinuierliches-Produktionsverfahren, bei welchem eine Abwandlung des Pastenverfahrens oder des Homogenisatorverfahrens in einem kontinuierlichen Prozess Anwendung findet.

Die erfindungsgemäßen Zusammensetzungen zeigen eine hohe Verdünnungsstabilität.

Ein weiterer Gegenstand der Erfindung ist daher die Verwendung der erfindungsgemäßen Zusammensetzung als verdünnungsstabiles Hydrophobierungsmittel.

Zeigt die Zusammensetzung bei einer Verdünnung mit Wasser auf einen Wassergehalt von mindestens 95% nach 12 Wochen keine Entmischung, gilt sie als verdünnungsstabil. Unter dem Wassergehalt wird dabei der Massenanteil des Wassers bezogen auf die Gesamtmasse der verdünnten Zusammensetzung (auch "Verdünnung" genannt) verstanden.

Bevorzugt ist die Verwendung der erfindungsgemäßen Zusammensetzung als verdünnungsstabile Zusammensetzung für die hydrophbierende Imprägnierung und/oder für die Massenhydrophobierung, besonders bevorzugt für die Massenhydrophobierung.

Die erfindungsgemäßen Zusammensetzungen eignen sich insbesondere zur hydrophobierenden Imprägnierung und Massenhydrophobierung von mineralischen Baustoffen (z.B. Zement, Beton, Mörtel, Estrich) und organischen Baustoffen (z.B. Holz), insbesondere mit dem Ziel des Bautenschutzes. Die erfindungsgemäßen Zusammensetzungen eignen sich dabei allerdings besonders gut für die Massenhydrophobierung von mineralischen Baustoffen. Besonders vorteilhaft ist die Verwendung der erfindungsgemäßen Zusammensetzung für die Herstellung von hydraulisch abbindenden Zusammensetzungen, insbesondere hydraulisch abbindenden mineralischen Baustoffen. Die erfindungsgemäßen Zusammensetzungen eignen sich daher besonders bevorzugt zur Massenhydrophobierung von mineralischen Baustoffen (z.B. Beton, Mörtel, Estrich). Sie eignen sich daher besonders bevorzugt für die Herstellung von hydraulisch abbindenden Zusammensetzungen. Besonders bevorzugt ist daher auch die Verwendung der erfindungsgemäßen Zusammensetzung als verdünnungsstabile Zusammensetzung für die Massenhydrophobierung von hydraulisch abbindenden Zusammensetzungen, insbesondere hydraulisch abbindenden mineralischen Zusammensetzungen.

Unter einer hydraulisch abbindenden Zusammensetzung wird eine Zusammensetzung verstanden, die, in Anwesenheit bzw. bei Zugabe von (zusätzlichem) Wasser (Zugabewasser, Anmachwasser) aushärtet. Die Gesamtwassermenge der Zusammensetzung ergibt sich aus der Summe der Menge des Zugabewassers und der Menge des Wassers, das in der erfindungsgemäßen Zusammensetzung, insbesondere der Emulsion, enthalten ist. Für die Aushärtung ist eine Umsetzung des Wassers mit dem hydraulischen Bindemittel verantwortlich. Dabei findet üblicherweise der Aufbau einer Kristallstruktur unter Einlagerung des Wassers als Kristallwasser statt. Beispiele für hydraulische Bindemittel sind Zement oder gebrannter Gips. Das bevorzugte hydraulische Bindemittel ist dabei Zement. Vorzugsweise ist die hydraulisch abbindende Zusammensetzung also eine hydraulisch abbindende Zementmischung, insbesondere Mörtel, Estrich oder Beton. Diese Zementmischungen enthalten neben dem Bindemittel Zement noch Zuschlagstoffe, wie beispielsweise Sand, Kies, Kalkstein oder Kreide, mit unterschiedlicher maximaler Partikelgröße und Partikelgrößenverteilung. In der Regel werden hydraulisch abbindende Zementmischungen als Mörtel bezeichnet, wenn die maximale Partikelgröße der Zuschlagsstoffe unter 4 mm, für Estriche bis zu 8 mm und bei Betonen größer 8 mm beträgt. Ungeachtet dessen, enthalten diesbezügliche hydraulisch abbindende Zementmischungen mit Hinblick auf ihre Applikation Wasser und können ferner weitere Additive, Zusatzmittel und/oder weitere hydraulisch wirkende mineralische Zusätze, wie beispielsweise - aber nicht ausschließlich - Puzzolane oder Flugasche, für spezielle Anwendungen enthalten.

Ein weiterer Gegenstand der Erfindung ist daher eine hydraulisch abbindende Zusammensetzung, enthaltend die Komponenten:

a) mindestens ein hydraulisches Bindemittel, vorzugsweise Zement,
b) mindestens eine erfindungsgemäße Zusammensetzung,
c) vorzugweise mindestens einen Zuschlagsstoff ausgewählt aus der Gruppe bestehend aus Sand, Kies, Kalkstein und Kreide;
d) vorzugsweise zusätzliches Wasser.

Es ist dabei bevorzugt, dass die hydraulisch abbindende Zusammensetzung

- 100 Gewichtsteile der Komponente a),
- 0,1 bis 10, vorzugsweise 0,2 bis 2 Gewichtsteile der Komponente b),
- 100 bis 600, vorzugsweise 200 bis 400 Gewichtsteile der Komponente c), und
- 20 bis 100, vorzugsweise 30 bis 70 Gewichtsteile Komponente d)

enthält.

Besonders bevorzugt verwendet man die erfindungsgemäße Zusammensetzung bzw. Emulsion in hydraulisch abbindenden Zementmischungen, indem man während der Herstellung eines applikationsfähigen Mörtels, Estrichs bzw. Betons in einem Mischer die erfindungsgemäße Zusammensetzung bzw. Emulsion in einem Zug oder portionsweise zusetzt und durch Mischen weitgehend gleichmäßig einarbeitet, alternativ kann man die Emulsion zusammen mit dem Zugabewasser vorlegen bzw. zusetzen.

Besonders vorteilhaft ist die Verwendung der erfindungsgemäßen Zusammensetzung bzw. Emulsion als Zusatz in hydraulisch abbindenden Zementmischungen, insbesondere in Beton, Gasbeton, Unterwasserbeton, Stahlbeton, Textilbeton bzw. Textilfaserbeton, Estrich, Mörtel, 2-Komponenten-Mörtel, Betoninstandsetzungsmörtel, um nur einige Beispiele zu nennen. Im Falle eines 2-Komponenten-Mörtels wird die zweite Komponente in flüssiger Form zur ersten Komponente (in der Regel einer Trockenmörtelmischung) direkt vor der Applikation zugegeben. Es kann sich hierbei beispielsweise um dem Fachmann bekannte Polymerlatex-Emulsionen zu Erhöhung der Elastizität der hydraulisch abbindenden Zementmischung handeln.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

## Beispiele

*Allgemeine Methoden:*

*Kernspinresonanzspektroskopie (NMR-Spektroskopie):*

Die Charakterisierung der Organosiloxane kann mit Hilfe der $^{1}$H-NMR- und $^{29}$Si-NMR-Spektroskopie erfolgen. Diese Methoden, insbesondere unter Berücksichtigung der Multiplizität der Kopplungen, sind dem Fachmann geläufig.

*Gel-Permeations-Chromatographie (GPC):*

GPC-Messungen zur Bestimmung der zahlenmittleren und gewichtsmittleren Molmassen Mw werden unter den

folgenden Messbedingungen durchgeführt: Säulenkombination SDV 1000/10000 Å (Länge 55 cm), Temperatur 35 °C, THF als mobile Phase, Fließrate 0,35 ml/min, Probenkonzentration 10 g/l, RI-Detektor, Auswertung der Polymere gegen Polystyrol-Standard (162-2520000 g/mol).

*Viskosität:*

Die Viskosität wird gemäß der Norm DIN 53015 (Ausgabedatum Juni 2019) bestimmt.

*Rohstoffe:*

| Bezeichnung | Firma | Charakterisierung |
|---|---|---|
| Dynasylan® OCTEO | Evonik Operations GmbH | n-Octyltriethoxysilan |
| Protectosil® 266 | Evonik Operations GmbH | n-Propylethoxysiloxan (n-Propyltriethoxysilan-Oligomeren-Gemisch) |
| D5 | Dow Silicone Deutschland GmbH | Decamethylcyclopentasiloxan |
| Siliconöl 1000: XIAMETER™ PMX-200 Silicone Fluid 1000 cSt | Dow Silicone Deutschland GmbH | $\alpha,\omega$-Dimethyl-Polydimethylsiloxan |
| TEGOPREN® 5840 | Evonik Operations GmbH | Trisiloxan |
| TEGOPREN® 3110 | Evonik Operations GmbH | Polyether-Polysiloxan-Copolymer |
| MTES-HARZ 200 | Evonik Operations GmbH | Methylsiliconharz |
| ACTICIDE® B 20 | Thor GmbH | Biozid (Konservierungsmittel) |
| ACTICIDE® MV | Thor GmbH | Biozid (Konservierungsmittel) |
| ACTICIDE® MBS | Thor GmbH | Biozid (Konservierungsmittel) |
| Emulgator 1: TERGITOL™ 15-S-5 Surfactant | The Dow Chemical Company | ethoxylierter sekundärer $C_{11}$-$C_{15}$-Alkohol mit im Mittel 5 EO-Einheiten |
| Emulgator 2: TERGITOL™ 15-S-15 Surfactant | The Dow Chemical Company | ethoxylierter sekundärer $C_{11}$-$C_{15}$-Alkohol mit 15 EO-Einheiten |
| TEGOSIVIN® HE 328 | Evonik Operations GmbH | Silan-Siloxan-basiertes Hydrophobierungsmittel |
| TEGOSIVIN® CA 880 | Evonik Operations GmbH | Silan-basiertes Hydrophobierungsmittel |

*Zusammensetzungen:*

*Beispiel 1:*

*a) Organosiloxan:*

Bei Raumtemperatur werden in einem Glaskolben 1476,2 g Protectosil® 266, 989,25 g Dynasylan® OCTEO, 36,42 g Wasser, 161,71 g D5 und 36,42 g Propylenglykol vorgelegt. Unter Rühren werden bei Raumtemperatur nacheinander 3,13 g Tetrabutylammoniumhydroxid (40%ig in Wasser) und 1,57 g Trifluormethansulfonsäure zugegeben und 1 h gerührt. Anschließend wird auf 85°C erwärmt und 4 h gerührt. Dann wird der Ansatz bei 100°C und Normaldruck ausdestilliert. Fällt kein Destillat mehr an erfolgt die Neutralisation durch Einleiten von Ammoniak bis ein pH > 8 erreicht ist. Nun wird die Temperatur auf 115°C erhöht und eine weitere Stunde im Vakuum (p < 10 mbar) ausdestilliert. Dann wird auf 60°C abgekühlt und 125,16 g Siliconöl 1000 zugegeben und 30 min eingerührt. Nach Filtration erhält man ein farbloses klares Produkt mit einer Viskosität von 34 mPa·s.

*b) Massenhydrophobierungsmittel (MHM):*

In einem doppelwandigen 2L Glasrührgefäß mit Temperierung werden 32,5 g demineralisiertes Wasser, 15,0 g Emulgator 1, 7,5 g Emulgator 2, 0,2 g $NaHCO_3$ und 0,5 g ACTICIDE® B 20 vorgelegt und bei Raumtemperatur bei 400 mbar fünf Minuten mit einer Zahnscheibe (Ø = 80 mm) mit 1000 rpm miteinander vermischt. Um einem Temperaturanstieg der Formulierung entgegen zu wirken, wird das Glasgefäß gekühlt und die Temperatur des Inhalts in einem Temperaturbereich von 15-30 °C gehalten. Die Rührgeschwindigkeit wird auf 2000 rpm erhöht und 250,0 g des unter a) beschriebenen Produkts über einen Zeitraum von 15 min unter 400 mbar zugetropft und eingearbeitet. Nach vollständiger Zugabe wird für 15 min bei 15-30 °C mit 2000 rpm bei 400 mbar nachgerührt. Anschließend werden innerhalb von 10 min 193,9 g demineralisiertes Wasser bei 400 mbar zugetropft. Dabei wird die Rührgeschwindigkeit nach und nach auf 1000 rpm reduziert. 0,5 g ACTICIDE® MV werden zugegeben und weitere 10 min bei 400 mbar mit 1000 rpm nachgerührt. Danach wird die Formulierung abgefüllt.

*Beispiel 2:*

*a) Organosiloxan:*

Bei Raumtemperatur werden in einem Glaskolben 1570,24 g Protectosil® 266, 1052,27 g Dynasylan® OCTEO, 38,74 g Wasser und 38,74 g Propylenglykol vorgelegt. Unter Rühren werden bei Raumtemperatur nacheinander 3,13 g Tetrabutylammoniumhydroxid (40%ig in Wasser) und 1,57 g Trifluormethansulfonsäure zugegeben und 1 h gerührt. Anschließend wird auf 85°C erwärmt und 4 h gerührt. Dann wird der Ansatz bei 100°C und Normaldruck ausdestilliert. Fällt kein Destillat mehr an erfolgt die Neutralisation durch Einleiten von Ammoniak bis ein pH > 8 erreicht ist. Nun wird die Temperatur auf 115°C erhöht und eine weitere Stunde im Vakuum (p < 10 mbar) ausdestilliert. Dann wird auf 60°C abgekühlt und 126,33 g Siliconöl 1000 zugegeben und 30 min eingerührt. Nach Filtration erhält man ein farbloses klares Produkt mit einer Viskosität von 32 mPa·s.

*b) Massenhydrophobierungsmittel (MHM):*

In einem doppelwandigen 2L Glasrührgefäß mit Temperierung werden 32,5 g demineralisiertes Wasser, 15,0 g Emulgator 1, 7,5 g Emulgator 2, 0,2 g $NaHCO_3$ und 0,5 g ACTICIDE® B 20 vorgelegt und bei Raumtemperatur bei 400 mbar fünf Minuten mit einer Zahnscheibe (Ø = 80 mm) mit 1000 rpm miteinander vermischt. Um einem Temperaturanstieg der Formulierung entgegen zu wirken, wird das Glasgefäß gekühlt und die Temperatur des Inhalts in einem Temperaturbereich von 15-30°C gehalten. Die Rührgeschwindigkeit wird auf 2000 rpm erhöht und 250,0 g unter a) beschriebenen Produkts über einen Zeitraum von 15 min unter 400 mbar zugetropft und eingearbeitet. Nach vollständiger Zugabe wird für 15 min bei 15-30°C mit 2000 rpm bei 400 mbar nachgerührt. Anschließend werden innerhalb von 10 min 193,9 g demineralisiertes Wasser bei 400 mbar zugetropft. Dabei wird die Rührgeschwindigkeit nach und nach auf 1000 rpm reduziert. 0,5 g ACTICIDE® MV werden zugegeben und weitere 10 min bei 400 mbar mit 1000 rpm nachgerührt. Danach wird die Formulierung abgefüllt.

*Beispiel 3:*

*a) Organosiloxan:*

Bei Raumtemperatur werden in einem Glaskolben 2694,4 g Protectosil® 266, 1805,6 g Dynasylan® OCTEO, 66,47 g Wasser, 295,15 g D5 und 66,47 g Propylenglykol vorgelegt. Unter Rühren werden bei Raumtemperatur nacheinander 5,72 g Tetrabutylammoniumhydroxid (40%ig in Wasser) und 2,86 g Trifluormethansulfonsäure zugegeben und 1 h gerührt. Anschließend wird auf 85°C erwärmt und 4 h gerührt. Dann wird der Ansatz bei 100°C und Normaldruck ausdestilliert. Fällt kein Destillat mehr an erfolgt die Neutralisation durch Einleiten von Ammoniak bis ein pH > 8 erreicht ist. Nun wird die Temperatur auf 115°C erhöht und eine weitere Stunde im Vakuum (p < 10 mbar) ausdestilliert. Dann wird auf 60°C abgekühlt. Nach der Filtration erhält man ein farbloses klares Produkt mit einer Viskosität von 30 mPa·s.

*b) Massenhydrophobierungsmittel (MHM):*

In einem doppelwandigen 2L Glasrührgefäß mit Temperierung werden 32,5 g demineralisiertes Wasser, 15,0 g Emulgator 1, 7,5 g Emulgator 2 und 0,2 g $NaHCO_3$ vorgelegt und bei Raumtemperatur bei 400 mbar fünf Minuten mit einer Zahnscheibe (Ø = 80 mm) mit 1000 rpm miteinandervermischt. Um einem Temperaturanstieg der Formulierung entgegen zu wirken, wird das Glasgefäß gekühlt und die Temperatur des Inhalts in einem Temperaturbereich von 15-30°C gehalten. Die Rührgeschwindigkeit wird auf 2000 rpm erhöht und 250,0 g unter a) beschriebenen Produkts, 0,5 g TEGOPREN®

5840 und 5,0 g TEGOPREN® 3110 über einen Zeitraum von 15 min unter 400 mbar zugetropft und eingearbeitet. Nach vollständiger Zugabe wird für 15 min bei 15-30°C mit 2000 rpm bei 400 mbar nachgerührt. Anschließend werden innerhalb von 10 min 193,9 g demineralisiertes Wasser bei 400 mbar zugetropft. Dabei wird die Rührgeschwindigkeit nach und nach auf 1000 rpm reduziert. 1,0 g ACTICIDE® MBS werden zugegeben und weitere 10 min bei 400 mbar mit 1000 rpm nachgerührt. Danach wird die Formulierung abgefüllt.

*Beispiel 4:*

*a) Organosiloxan:*

Bei Raumtemperatur werden in einem Glaskolben 1317,26 g Protectosil® 266, 882,74 g Dynasylan® OCTEO, 32,50 g Wasser und 144,30 g D5 vorgelegt. Unter Rühren werden bei Raumtemperatur nacheinander 2,76 g Tetrabutylammoniumhydroxid (40%ig in Wasser) und 1,38 g Trifluormethansulfonsäure zugegeben und 1 h gerührt. Anschließend wird auf 85°C erwärmt und 4 h gerührt. Dann wird der Ansatz bei 100°C und Normaldruck ausdestilliert. Fällt kein Destillat mehr an erfolgt die Neutralisation durch Einleiten von Ammoniak bis ein pH > 8 erreicht ist. Nun wird die Temperatur auf 115°C erhöht und eine weitere Stunde im Vakuum (p < 10 mbar) ausdestilliert. Dann wird auf 60°C abgekühlt. Nach Filtration erhält man ein farbloses klares Produkt mit einer Viskosität von 20 mPa·s.

*b) Massenhydrophobierungsmittel:*

In einem doppelwandigen 2L Glasrührgefäß mit Temperierung werden 32,5 g demineralisiertes Wasser, 15,0 g Emulgator 1, 7,5 g Emulgator 2 und 0,2 g $NaHCO_3$ vorgelegt und bei Raumtemperatur bei 400 mbar fünf Minuten mit einer Zahnscheibe (Ø = 80 mm) mit 1000 rpm miteinander vermischt. Um einem Temperaturanstieg der Formulierung entgegen zu wirken, wird das Glasgefäß gekühlt und die Temperatur des Inhalts in einem Temperaturbereich von 15-30°C gehalten. Die Rührgeschwindigkeit wird auf 2000 rpm erhöht und 250,0 g unter a) beschriebenen Produkts, 0,5 g TEGOPREN® 5840 und 5,0 g TEGOPREN® 3110 über einen Zeitraum von 15 min unter 400 mbar zugetropft und eingearbeitet. Nach vollständiger Zugabe wird für 15 min bei 15-30°C mit 2000 rpm bei 400 mbar nachgerührt. Anschließend werden innerhalb von 10 min 193,9 g demineralisiertes Wasser bei 400 mbar zugetropft. Dabei wird die Rührgeschwindigkeit nach und nach auf 1000 rpm reduziert. 1,0 g ACTICIDE® MBS werden zugegeben und weitere 10 min bei 400 mbar mit 1000 rpm nachgerührt. Danach wird die Formulierung abgefüllt.

*Beispiel 5*

*a) Organosiloxan:*

Bei Raumtemperatur werden in einem Glaskolben 1317,26 g Protectosil® 266, 882,74 g Dynasylan® OCTEO, 32,50 g Wasser, 144,30 g D5 und 44,48 g Neopentylglykol vorgelegt. Unter Rühren werden bei Raumtemperatur nacheinander 2,81 g Tetrabutylammoniumhydroxid (40%ig in Wasser) und 1,40 g Trifluormethansulfonsäure zugegeben und 1 h gerührt. Anschließend wird auf 85°C erwärmt und 4 h gerührt. Dann wird der Ansatz bei 100°C und Normaldruck ausdestilliert. Fällt kein Destillat mehr an erfolgt die Neutralisation durch Einleiten von Ammoniak bis ein pH > 8 erreicht ist. Nun wird die Temperatur auf 115°C erhöht und eine weitere Stunde im Vakuum (p < 10 mbar) ausdestilliert. Dann wird auf 60°C abgekühlt. Nach Filtration erhält man ein farbloses klares Produkt mit einer Viskosität von 26 mPa·s.

*b) Massenhydrophobierungsmittel:*

In einem doppelwandigen 2L Glasrührgefäß mit Temperierung werden 32,5 g demineralisiertes Wasser, 15,0 g Emulgator 1, 7,5 g Emulgator 2 und 0,2 g $NaHCO_3$ vorgelegt und bei Raumtemperatur bei 400 mbar fünf Minuten mit einer Zahnscheibe (Ø = 80 mm) mit 1000 rpm miteinander vermischt. Um einem Temperaturanstieg der Formulierung entgegen zu wirken, wird das Glasgefäß gekühlt und die Temperatur des Inhalts in einem Temperaturbereich von 15-30°C gehalten. Die Rührgeschwindigkeit wird auf 2000 rpm erhöht und 250,0 g unter a) beschriebenen Produkts, 0,5 g TEGOPREN® 5840 und 5,0 g TEGOPREN® 3110 über einen Zeitraum von 15 min unter 400 mbar zugetropft und eingearbeitet. Nach vollständiger Zugabe wird für 15 min bei 15-30°C mit 2000 rpm bei 400 mbar nachgerührt. Anschließend werden innerhalb von 10 min 193,9 g demineralisiertes Wasser bei 400 mbar zugetropft. Dabei wird die Rührgeschwindigkeit nach und nach auf 1000 rpm reduziert. 1,0 g ACTICIDE® MBS werden zugegeben und weitere 10 min bei 400 mbar mit 1000 rpm nachgerührt. Danach wird die Formulierung abgefüllt.

*Beispiel 6*

*a) Organosiloxan:*

Bei Raumtemperatur werden in einem Glaskolben 877,19 g Protectosil® 266 (destilliert), 438,60 g Dynasylan® OCTEO, 87,72 g D5, 4,39 g 0,5%ige Schwefelsäure vorgelegt und auf 80°C temperiert. Bei dieser Temperatur werden innerhalb von 20 min 43,86 g Ethanol zugetropft und 30 Minuten nachgerührt. Anschließend wird auf 50°C gekühlt und 43,86 g Wasser innerhalb von 3 Minuten zugetropft. Nach zweistündigem Rühren werden 4,39 g einer 0,5%igen Natriumcarbonatlösung zugesetzt und für weitere 10 Minuten gerührt. Dann wird auf 115°C erwärmt und auf p < 10 mbar evakuiert. Nach einstündiger Destillation wird auf 60°C abgekühlt und filtriert. Nach Filtration erhält man ein farbloses klares Produkt mit einer Viskosität von 9 mPa·s.

*b) Massenhydrophobierungsmittel (MHM):*

In einem doppelwandigen 2L Glasrührgefäß mit Temperierung werden 32,5 g demineralisiertes Wasser, 15,0 g Emulgator 1, 7,5 g Emulgator 2, 0,2 g $NaHCO_3$ und 0,5 g ACTICIDE® B 20 vorgelegt und bei Raumtemperatur bei 400 mbar fünf Minuten mit einer Zahnscheibe (Ø = 80 mm) mit 1000 rpm miteinander vermischt. Um einem Temperaturanstieg der Formulierung entgegen zu wirken, wird das Glasgefäß gekühlt und die Temperatur des Inhalts in einem Temperaturbereich von 15-30°C gehalten. Die Rührgeschwindigkeit wird auf 2000 rpm erhöht und 250,0 g unter a) beschriebenen Produkts über einen Zeitraum von 15 min unter 400 mbar zugetropft und eingearbeitet. Nach vollständiger Zugabe wird für 15 min bei 15-30°C mit 2000 rpm bei 400 mbar nachgerührt. Anschließend werden innerhalb von 10 min 193,9 g demineralisiertes Wasser bei 400 mbar zugetropft. Dabei wird die Rührgeschwindigkeit nach und nach auf 1000 rpm reduziert. 0,5 g ACTICIDE® MV werden zugegeben und weitere 10 min bei 400 mbar mit 1000 rpm nachgerührt. Danach wird die Formulierung abgefüllt.

*Vergleichsbeispiel 1:*

*Massenhydrophobierungsmittel (MHM):*

TEGOSIVIN® HE 328 (Evonik Operations GmbH): Silan-Siloxan-basiertes Hydrophobierungsmittel

*Vergleichsbeispiel 2:*

*Massenhydrophobierungsmittel (MHM):*

TEGOSIVIN® CA 880 (Evonik Operations GmbH): Silan-basiertes Hydrophobierungsmittel

*Vergleichsbeispiel 3:*

*a) Organosiloxan:*

Bei Raumtemperatur werden in einem Glaskolben 2441,40 g Protectosil® 266, 40,15 g Wasser, 178,29 g D5 und 40,15 g Propylenglykol vorgelegt. Unter Rühren werden bei Raumtemperatur nacheinander 3,13 g Tetrabutylammoniumhydroxid (40%ig in Wasser) und 1,57 g Trifluormethansulfonsäure zugegeben und 1 h gerührt. Anschließend wird auf 85°C erwärmt und 4 h gerührt. Dann wird der Ansatz bei 100°C und Normaldruck ausdestilliert. Fällt kein Destillat mehr an erfolgt die Neutralisation durch Einleiten von Ammoniak bis ein pH > 8 erreicht ist. Nun wird die Temperatur auf 115°C erhöht und eine weitere Stunde im Vakuum (p < 10 mbar) ausdestilliert. Dann wird auf 60°C abgekühlt und 127,68 g Siliconöl 1000 zugegeben und 30 min eingerührt. Nach Filtration erhält man ein farbloses klares Produkt mit einer Viskosität von 168 mPa·s.

*b) Massenhydrophobierungsmittel (MHM)*

In einem doppelwandigen 2L Glasrührgefäß mit Temperierung werden 32,5 g demineralisiertes Wasser, 15,0 g Emulgator 1, 7,5 g Emulgator 2, 0,2 g $NaHCO_3$ und 0,5 g ACTICIDE® B 20 vorgelegt und bei Raumtemperatur bei 400 mbar fünf Minuten mit einer Zahnscheibe (Ø = 80 mm) mit 1000 rpm miteinander vermischt. Um einem Temperaturanstieg der Formulierung entgegen zu wirken, wird das Glasgefäß gekühlt und die Temperatur des Inhalts in einem Temperaturbereich von 15-30°C gehalten. Die Rührgeschwindigkeit wird auf 2000 rpm erhöht und 250,0 g unter a) beschriebenen Produkts über einen Zeitraum von 15 min unter 400 mbar zugetropft und eingearbeitet. Nach vollständiger Zugabe wird für 15 min bei 15-30°C mit 2000 rpm bei 400 mbar nachgerührt. Anschließend werden innerhalb von 10 min 193,9 g demineralisiertes Wasser bei 400 mbar zugetropft. Dabei wird die Rührgeschwindigkeit nach und nach auf 1000 rpm

reduziert. 0,5 g ACTICIDE® MV werden zugegeben und weitere 10 min bei 400 mbar mit 1000 rpm nachgerührt. Danach wird die Formulierung abgefüllt.

*Vergleichsbeispiel 4*

*a) Organosiloxan:*

Bei Raumtemperatur werden in einem Glaskolben 2502,20 g Dynasylan® OCTEO, 30,71 g Wasser, 136,38 g D5 und 30,71 g Propylenglykol vorgelegt. Unter Rühren werden bei Raumtemperatur nacheinander 3,13 g Tetrabutylammoniumhydroxid (40%ig in Wasser) und 1,57 g Trifluormethansulfonsäure zugegeben und 1 h gerührt. Anschließend wird auf 85°C erwärmt und 4 h gerührt. Dann wird der Ansatz bei 100°C und Normaldruck ausdestilliert. Fällt kein Destillat mehr an erfolgt die Neutralisation durch Einleiten von Ammoniak bis ein pH > 8 erreicht ist. Nun wird die Temperatur auf 115°C erhöht und eine weitere Stunde im Vakuum (p < 10 mbar) ausdestilliert. Dann wird auf 60°C abgekühlt und 108,61 g Siliconöl 1000 zugegeben und 30 min eingerührt. Nach Filtration erhält man ein farbloses klares Produkt mit einer Viskosität von 6 mPa·s.

*b) Massenhydrophobierungsmittel (MHM):*

In einem doppelwandigen 2L Glasrührgefäß mit Temperierung werden 32,5 g demineralisiertes Wasser, 15,0 g Emulgator 1, 7,5 g Emulgator 2, 0,2 g $NaHCO_3$ und 0,5 g ACTICIDE® B 20 vorgelegt und bei Raumtemperatur bei 400 mbar fünf Minuten mit einer Zahnscheibe (Ø = 80 mm) mit 1000 rpm miteinander vermischt. Um einem Temperaturanstieg der Formulierung entgegen zu wirken, wird das Glasgefäß gekühlt und die Temperatur des Inhalts in einem Temperaturbereich von 15-30°C gehalten. Die Rührgeschwindigkeit wird auf 2000 rpm erhöht und 250,0 g unter a) beschriebenen Produkts über einen Zeitraum von 15 min unter 400 mbar zugetropft und eingearbeitet. Nach vollständiger Zugabe wird für 15 min bei 15-30°C mit 2000 rpm bei 400 mbar nachgerührt. Anschließend werden innerhalb von 10 min 193,9 g demineralisiertes Wasser bei 400 mbar zugetropft. Dabei wird die Rührgeschwindigkeit nach und nach auf 1000 rpm reduziert. 0,5 g ACTICIDE® MV werden zugegeben und weitere 10 min bei 400 mbar mit 1000 rpm nachgerührt. Danach wird die Formulierung abgefüllt.

*Vergleichsbeispiel 5:*

*Massenhydrophobierungsmittel in Anlehung an EP 3 243 807 A1 (MHM):*

In einem doppelwandigen 2L Glasrührgefäß mit Temperierung werden 32,5 g demineralisiertes Wasser, 15,0 g Emulgator 1, 7,5 g Emulgator 2, 0,2 g $NaHCO_3$ und 0,5 g ACTICIDE® B 20 vorgelegt und bei Raumtemperatur bei 400 mbar fünf Minuten mit einer Zahnscheibe (Ø = 80 mm) mit 1000 rpm miteinander vermischt. Um einem Temperaturanstieg der Formulierung entgegen zu wirken, wird das Glasgefäß gekühlt und die Temperatur des Inhalts in einem Temperaturbereich von 15-30°C gehalten. Die Rührgeschwindigkeit wird auf 2000 rpm erhöht und 125,0 g Protectosil® 266 und 125,0 g Dynasylan® OCTEO über einen Zeitraum von 15 min unter 400 mbar zugetropft und eingearbeitet. Nach vollständiger Zugabe wird für 15 min bei 15-30°C mit 2000 rpm bei 400 mbar nachgerührt. Anschließend werden innerhalb von 10 min 193,9 g demineralisiertes Wasser bei 400 mbar zugetropft. Dabei wird die Rührgeschwindigkeit nach und nach auf 1000 rpm reduziert. 0,5 g Acticide MV werden zugegeben und weitere 10 min bei 400 mbar mit 1000 rpm nachgerührt. Danach wird die Formulierung abgefüllt.

*Vergleichsbeispiel 6:*

*Massenhydrophobierungsmittel in Anlehnung an CN 103819127 A (MHM):*

In einem doppelwandigen 2L Glasrührgefäß mit Temperierung werden 32,5 g demineralisiertes Wasser, 15,0 g Emulgator 1, 7,5 g Emulgator 2, 0,2 g $NaHCO_3$ und 0,5 g ACTICIDE® B 20 vorgelegt und bei Raumtemperatur bei 400 mbar fünf Minuten mit einer Zahnscheibe (Ø = 80 mm) mit 1000 rpm miteinander vermischt. Um einem Temperaturanstieg der Formulierung entgegen zu wirken, wird das Glasgefäß gekühlt und die Temperatur des Inhalts in einem Temperaturbereich von 15-30°C gehalten. Die Rührgeschwindigkeit wird auf 2000 rpm erhöht und 75,0 g MTES-HARZ 200 und 175,0 g Dynasylan® OCTEO über einen Zeitraum von 15 min unter 400 mbar zugetropft und eingearbeitet. Nach vollständiger Zugabe wird für 15 min bei 15-30°C mit 2000 rpm bei 400 mbar nachgerührt. Anschließend werden innerhalb von 10 min 193,9 g demineralisiertes Wasser bei 400 mbar zugetropft. Dabei wird die Rührgeschwindigkeit nach und nach auf 1000 rpm reduziert. 0,5 g ACTICIDE® MV werden zugegeben und weitere 10 min bei 400 mbar mit 1000 rpm nachgerührt. Danach wird die Formulierung abgefüllt.

*Anwendungstechnische Prüfung*

*1. Bestimmung der Verdünnungsstabilität*

Von den Formulierungen der erfinderischen Beispiele 1 bis 6 (B1 bis B6) und der Vergleichsbeispiele 1 bis 6 (V1 bis V6) wurden durch Abmischung mit demineralisiertem Wasser 5, 10, und 20 %ige Verdünnungen hergestellt. Die Verdünnungen wurden sofort und wochenweise vor einer Lichtquelle visuell auf ihre Stabilität untersucht. Zur besseren Beurteilung diente ein 100 ml Standzylinder mit Skalierung als Probengefäß. Allgemein gilt: je höher eine Emulsion verdünnt wird, umso ausgeprägter ist die Neigung zur Entmischung.

Tabelle 1: Ergebnisse der visuellen Beurteilung* der Verdünnungen über die Zeit (in Wochen (W); 0 W = sofort)

| | Verdünnung** | 0 W | 1 W | 2 W | 3 W | 4 W | 5 W | 10 W | 11 W | 12 W |
|---|---|---|---|---|---|---|---|---|---|---|
| B1 | 5 % | A | A | A | A | A | A | A | A | A |
| | 10 % | A | A | A | A | A | A | A | A | A |
| | 20 % | A | A | A | A | A | A | A | A | A |
| B2 | 5 % | A | A | A | A | A | A | A | A | A |
| | 10 % | A | A | A | A | A | A | A | A | A |
| | 20 % | A | A | A | A | A | A | A | A | A |
| B3 | 5 % | A | A | A | A | A | A | A | A | A |
| | 10 % | A | A | A | A | A | A | A | A | A |
| | 20 % | A | A | A | A | A | A | A | A | A |
| B4 | 5 % | A | A | A | A | A | A | A | A | A |
| | 10 % | A | A | A | A | A | A | A | A | A |
| | 20 % | A | A | A | A | A | A | A | A | A |
| B5 | 5 % | A | A | A | A | A | A | A | A | A |
| | 10 % | A | A | A | A | A | A | A | A | A |
| | 20 % | A | A | A | A | A | A | A | A | A |
| B6 | 5 % | A | A | A | A | A | A | A | A | A |
| | 10 % | A | A | A | A | A | A | A | A | A |
| | 20 % | A | A | A | A | A | A | A | A | A |
| V1 | 5 % | A | B | C | C | C | C | C | C | C |
| | 10 % | A | B | B | C | C | C | C | C | C |
| | 20 % | A | A | B | C | C | C | C | C | C |
| V2 | 5 % | A | B | C | C | C | C | C | C | C |
| | 10 % | A | B | B | C | C | C | C | C | C |
| | 20 % | A | A | B | C | C | C | C | C | C |
| V3 | 5 % | A | B | B | B | B | B | B | B | B |
| | 10 % | A | A | A | A | A | A | B | B | B |
| | 20 % | A | A | A | A | A | A | B | B | B |
| V4 | 5 % | A | B | B | B | B | B | B | B | B |
| | 10 % | A | B | B | B | B | B | B | B | B |
| | 20 % | A | A | A | A | A | A | A | A | A |

(fortgesetzt)

| | Verdünnung** | 0 W | 1 W | 2 W | 3 W | 4 W | 5 W | 10 W | 11 W | 12 W |
|---|---|---|---|---|---|---|---|---|---|---|
| V5 | 5 % | A | B | B | B | B | B | B | B | B |
| | 10 % | A | B | B | B | B | B | B | B | B |
| | 20 % | A | A | A | A | A | A | B | B | B |
| V6 | 5 % | A | B | B | B | B | B | B | B | B |
| | 10 % | A | B | B | B | B | B | B | B | B |
| | 20 % | A | A | A | A | A | A | A | A | A |

* Bewertungsschema:
A: homogen, keine Anzeichen von Entmischung
B: Aufrahmung, Schlierenbildung
C: Ausdünnung (> 3 ml)
** x% = x Gewichtsteile MHM auf 100 Gewichtsteile Verdünnung

Die Ergebnisse zeigen deutlich, dass die erfindungsgemäßen Beispiele auch bei hohen Verdünnungen und über einen Zeitraum von 3 Monaten keine Tendenzen zur Entmischung bzw. Separation in Form von Ausdünnungen oder Aufrahmungen zeigen, wohingegen die Vergleichsbeispiele bereits nach einer Woche bei Konzentrationen ≤ 10 % Aufrahmungen bzw. Schlierenbildung zeigen.

*2. Zusammensetzung und Herstellung der Prüfkörper*

Die Mörtelherstellung zur Bestimmung der Frisch- und Festmörteleigenschaften erfolgt in Anlehnung an DIN EN 196-1 (2016).

Tabelle 2: Zusammensetzung der Mörtelmischungen

| | |
|---|---|
| CEM I 42,5 R | 450 g |
| Normsand (DIN EN 196-1) | 1350 g |
| Wasser | 225 g |
| Massenhydrophobierungsmittel (MHM) | 0,5 % / 1 %* |

* Lieferform bezogen auf den Zementgehalt (x% = x Gewichtsteile MHM bezogen auf 100 Gewichtsteile Zement in der Zusammensetzung)

Die Massenhydrophobierungsmittel wurden dem Zugabewasser zugefügt. Sie lagen mit Ausnahme von Vergleichsbeispiel 2 mit einem Aktivgehalt von 50 % vor. Vergleichsbeispiel 2 wies einen Aktivgehalt von 60 % auf. Eine Null-Mischung, ohne Zusatz eines Massenhydrophobierungsmittels, diente als Vergleich. Die Mörtelprobekörper (40·40·160 $mm^3$) wurden nach 24 Stunden aus der Form entschalt und bis zum Prüfdatum im Klima 23 °C/50 % r.F. gelagert.

*3. Bestimmung der Frischmörteleigenschaften*

Von den Formulierungen der Beispiele 1 bis 6 und der Vergleichsbeispiele 1 bis 6 wurden folgende Frischmörteleigenschaften in Anlehnung an DIN 18555-2 (1982) bestimmt: Ausbreitmaß, Rohdichte und Luftporengehalt.

Tabelle 3: Frischmörteleigenschaften

| | Dosierung MHM [%] | Ausbreitmaß [mm] | Luftgehalt [%] | Rohdichte [kg/$dm^3$] |
|---|---|---|---|---|
| Null-Mischung | - | 178 | 5,8 | 2184,4 |
| B1 | 0,5 | 184 | 4,5 | 2187,5 |
| | 1 | 185 | 4,5 | 2186,1 |
| B2 | 0,5 | 181 | 4,6 | 2188,0 |
| | 1 | 181 | 4,6 | 2180,7 |

(fortgesetzt)

| | Dosierung MHM [%] | Ausbreitmaß [mm] | Luftgehalt [%] | Rohdichte [kg/dm$^3$] |
|---|---|---|---|---|
| B3 | 0,5 | 176 | 5,4 | 2207,0 |
| | 1 | 177 | 5,5 | 2191,4 |
| B4 | 0,5 | 180 | 6,2 | 2186,0 |
| | 1 | 180 | 6,1 | 2179,5 |
| B5 | 0,5 | 172 | 5,6 | 2205,0 |
| | 1 | 173 | 5,6 | 2212,3 |
| B6 | 0,5 | 183 | 4,5 | 2187,6 |
| | 1 | 184 | 4,3 | 2193,5 |
| V1 | 0,5 | 183 | 5,4 | 2167,9 |
| | 1 | 187 | 5,1 | 2177,5 |
| V2 | 0,5 | 182 | 6,4 | 2176,0 |
| | 1 | 184 | 6,2 | 2188,7 |
| V3 | 0,5 | 183 | 5,2 | 2171,2 |
| | 1 | 184 | 4,8 | 2181,9 |
| V4 | 0,5 | 175 | 4,4 | 2194,1 |
| | 1 | 177 | 4,6 | 2186,9 |
| V5 | 0,5 | 185 | 4,0 | 2198,0 |
| | 1 | 188 | 4,3 | 2194,6 |
| V6 | 0,5 | 176 | 4,5 | 2191,4 |
| | 1 | 182 | 4,1 | 2198,1 |

*4. Bestimmung der kapillaren Wasseraufnahme*

Das Verfahren dient zur Beurteilung der Intensität der Wasseraufnahme aufgrund von Kapillarkräften. Die Durchführung erfolgt in Anlehnung an DIN EN ISO 15148 (2018). Die Probekörper mit den Abmessungen 40·40·160 mm$^3$ werden für 28 Tage bei einem Normklima von 23 °C/50 % rel. Luftfeuchtigkeit gelagert. Anschließend werden sie gewogen (Laborwaage, Anzeige 0,1 g) und mit der Unterseite auf zwei Metallwinkel in ein Wasserbecken gelegt, so dass ein freier Zutritt des Wassers an der Unterseite möglich ist. Der Wasserspiegel sollte (5±2) mm über der Unterkante der Prismen liegen. Nach 24 Stunden werden die Probekörper erneut gewogen, nachdem oberflächlich anhaftendes Wasser mit einem saugfähigen Papiertuch entfernt wurde. Die Wasseraufnahme wird wie folgt berechnet:

$$WA = \frac{\mathrm{m2}\ \cdot 100}{\mathrm{m1}} - 100$$

WA: Wasseraufnahme in %
m1: Masse des Probekörpers in g vor der Wasserlagerung
m2: Masse des Probekörpers in g nach der Wasserlagerung

Die Ergebnisse in Tabelle 4 stellen jeweils den Mittelwert aus drei Einfachbestimmungen dar.

Tabelle 4: Ergebnisse der Bestimmung der kapillaren Wasseraufnahme [%] nach 24 Stunden

| | 0 % MHM | 0,5 % MHM* | 1 % MHM* |
|---|---|---|---|
| Null-Mischung | 4,2 | - | - |
| B1 | | 0,8 | 0,5 |
| B2 | | 0,8 | 0,5 |

(fortgesetzt)

| | 0 % MHM | 0,5 % MHM* | 1 % MHM* |
|---|---|---|---|
| B3 | | 1,3 | 0,5 |
| B4 | | 1,6 | 0,6 |
| B5 | | 1,7 | 0,6 |
| B6 | | 1,1 | 0,5 |
| V1 | | 1,1 | 0,5 |
| V2 | | 1,2 | 0,5 |
| V3 | | 1,4 | 0,9 |
| V4 | | 0,9 | 0,5 |
| V5 | | 1,0 | 0,6 |
| V6 | | 1,0 | 0,5 |
| * Dosierung bezogen auf Zement (x% = x Gewichtsteile MHM bezogen auf 100 Gewichtsteile Zement in Zusammensetzung) | | | |

*5. Bestimmung der Biegezug- und Druckfestigkeit*

Von den Mörtelprüfkörpern der Abmessungen 40·40·160 $mm^3$ wurden nach der jeweiligen Lagerungszeit die Biegezug- und Druckfestigkeit bestimmt. Die Prüfung erfolgte nach DIN EN 196-1 (2016) mit einer Prüfpresse der Firma Toni Technik, Modell ToniPRAX. Die Ergebnisse in Tabelle 5 stellen jeweils den Mittelwert aus drei Einfachbestimmungen dar.

Tabelle 5: Ergebnisse der Biegezug- und Druckfestigkeitsbestimmungen nach 1 und 28 Tagen

| | Dosierung MHM [%] | Druckfestigkeit [N/mm$^2$] | | Biegezugfestigkeit [N/mm$^2$] | |
|---|---|---|---|---|---|
| | | 1 Tag | 28 Tagen | 1 Tag | 28 Tagen |
| Null-Mischung | - | 19,7 | 37,3 | 4,4 | 7,1 |
| B1 | 0,5 | 20,6 | 38,5 | 5,1 | 8,1 |
| | 1 | 19,6 | 38,7 | 4,9 | 8,0 |
| B2 | 0,5 | 20,7 | 39,5 | 5,1 | 8,5 |
| | 1 | 19,9 | 37,3 | 4,5 | 8,5 |
| B3 | 0,5 | 21,0 | 41,6 | 5,5 | 9,0 |
| | 1 | 21,4 | 40,5 | 4,9 | 8,7 |
| B4 | 0,5 | 19,9 | 39,4 | 5,1 | 9,5 |
| | 1 | 19,2 | 39,6 | 5,3 | 8,8 |
| B5 | 0,5 | 24,3 | 40,0 | 5,3 | 10,0 |
| | 1 | 22,8 | 40,4 | 5,1 | 9,7 |
| B6 | 0,5 | 20,6 | 39,2 | 4,9 | 8,1 |
| | 1 | 19,8 | 39,2 | 4,9 | 8,9 |
| V1 | 0,5 | 22,1 | 38,5 | 5,2 | 8,3 |
| | 1 | 21,2 | 38,7 | 5,2 | 7,9 |
| V2 | 0,5 | 19,6 | 33,9 | 5,0 | 8,8 |
| | 1 | 18,5 | 34,2 | 4,6 | 8,5 |
| V3 | 0,5 | 18,7 | 37,5 | 3,7 | 8,7 |
| | 1 | 19,3 | 35,8 | 4,0 | 8,5 |

(fortgesetzt)

| | Dosierung MHM [%] | Druckfestigkeit [N/mm²] | | Biegezugfestigkeit [N/mm²] | |
|---|---|---|---|---|---|
| | | 1 Tag | 28 Tagen | 1 Tag | 28 Tagen |
| V4 | 0,5 | 20,6 | 39,2 | 5,3 | 7,9 |
| | 1 | 18,8 | 40,5 | 4,5 | 7,9 |
| V5 | 0,5 | 19,7 | 39,1 | 4,7 | 7,5 |
| | 1 | 18,9 | 38,0 | 4,9 | 7,8 |
| V6 | 0,5 | 19,3 | 39,7 | 4,7 | 7,5 |
| | 1 | 16,6 | 38,4 | 4,3 | 9,1 |

Die Frisch- und Festmörteleigenschaften (kapillare Wasseraufnahme, Festigkeiten) werden durch den Zusatz der erfindungsgemäßen Massenhydrophobierungsmittel B1 bis B6, im Vergleich zu den nicht erfindungsgemäßen Massenhydrophobierungsmittel V1 bis V6, nicht nennenswert beeinflußt. Sowohl die erfindungsgemäßen als auch die nicht erfindungsgemäßen Massenhydrophobierungsmittel zeigen bessere Eigenschaften als die Nullmischung.

## Patentansprüche

1. Zusammensetzung, enthaltend mindestens ein Organosiloxan (A), mindestens einen Emulgator (B) und Wasser, **dadurch gekennzeichnet, dass** das Organosiloxan (A) SiC-gebundene $C_2$-$C_6$-Alkylreste und SiC-gebundene $C_7$-$C_{18}$-Alkylreste aufweist.

2. Zusammensetzung nach Anspruch 1, **dadurch gekennzeichnet, dass** es sich um eine Emulsion, vorzugsweise eine Öl-in-Wasser-Emulsion handelt.

3. Zusammensetzung nach Anspruch 1 oder 2, **dadurch gekennzeichnet, dass** die SiC-gebundenen $C_2$-$C_6$-Alkylreste und SiC-gebundenen $C_7$-$C_{18}$-Alkylreste Propylreste und Octylreste umfassen, vorzugsweise Propylreste und Octylreste sind.

4. Zusammensetzung nach einem der Ansprüche 1 bis 3, **dadurch gekennzeichnet, dass** das Organosiloxan (A) Einheiten der Formel

$$R^1Si(OR^2)_aO_{(3-a)/2} \qquad (I),$$

und vorzugsweise Einheiten der Formel

$$R^3{}_2Si(OR^2)_bO_{(2-b)/2} \qquad (II),$$

enthält oder aus ihnen besteht,
in denen

$R^1$ ein $C_2$-$C_6$-Alkylrest oder ein $C_7$-$C_{18}$-Alkylrest, vorzugsweise ein Propylrest oder ein Octylrest ist, mit der Maßgabe, dass das Organosiloxan (A) als Reste $R^1$ sowohl $C_2$-$C_6$-Alkylreste als auch $C_7$-$C_{18}$-Alkylreste, vorzugsweise sowohl Propylreste als auch Octylreste enthält;
$R^2$ ein $C_1$-$C_4$-Alkylrest, vorzugsweise Ethylrest, oder ein Wasserstoffatom oder ein Rest der Formel $-[YO]_nZ$ ist, wobei

Y ein $C_2$-$C_{10}$-Alkylenrest, vorzugsweise ein $C_2$-$C_5$-Alkylenrest ist,
n eine ganze Zahl von 1 bis 10, vorzugsweise 1 ist, und
Z ein Wasserstoffatom oder eine Bindung zu einem Siliziumatom ist;

$R^3$ ein $C_1$-$C_4$-Alkylrest, vorzugsweise ein Methylrest ist;

a 0, 1 oder 2 ist;
b 0 oder 1, vorzugsweise 0 ist.

**5.** Zusammensetzung nach einem der Ansprüche 1 bis 4, **dadurch gekennzeichnet, dass** das Organosiloxan (A) bezogen auf die Gesamtzahl der Einheiten der Formel (I) und (II) mindestens 50 mol%, vorzugsweise mindestens 60 mol%, insbesondere mindestens 70 mol% Einheiten der Formel (I) und maximal 50 mol%, vorzugsweise maximal 40 mol%, insbesondere maximal 30 mol% Einheiten der Formel (II) enthält oder daraus besteht.

**6.** Zusammensetzung nach einem der Ansprüche 1 bis 5, **dadurch gekennzeichnet, dass** das Organosiloxan (A) in Massenanteilen bezogen auf seine Gesamtmasse

- 20% bis 80%, vorzugsweise 30% bis 70%, insbesondere 40% bis 60% SiC-gebundene $C_2$-$C_6$-Alkylreste und
- 30% bis 40%, vorzugsweise 25% bis 35%, insbesondere 20% bis 30% SiC-gebundene $C_7$-$C_{18}$-Alkylreste

enthält.

**7.** Zusammensetzung nach einem der Ansprüche 1 bis 6, **dadurch gekennzeichnet, dass** das Organosiloxan (A) nach einem Verfahren herstellbar ist, umfassend einen Verfahrensschritt, bei dem eine Reaktionsmischung aus

i. mindestens einem $C_2$-$C_6$-Alkylalkoxysilan und/oder mindestens einem $C_2$-$C_6$-Alkylalkoxysiloxan, vorzugsweise mindestens einem $C_2$-$C_6$-Alkylalkoxysiloxan, insbesondere einem Propyltriethoxysilan-Oligomeren-Gemisch,
ii. mindestens einem $C_7$-$C_{18}$-Alkylalkoxysilan und/oder mindestens einem $C_7$-$C_{18}$-Alkylalkoxysiloxan, vorzugsweise mindestens einem $C_7$-$C_{18}$-Alkylalkoxysilan, insbesondere Octyltriethoxysilan,
iii. Wasser,
iv. vorzugsweise mindestens einem mono- oder polyfunktionellen $C_2$-$C_{10}$-Alkohol,
v. vorzugsweise mindestens einem cyclischen Dimethylsiloxan,
vi. vorzugsweise mindestens einem Tetraalkylammoniumhydroxid, insbesondere Tetrabutylammoniumhydroxid,
vii. vorzugsweise mindestens einer Supersäure, insbesondere Trifluormethansulfonsäure,
viii. und gegebenenfalls weiteren Stoffen

umgesetzt wird.

**8.** Zusammensetzung nach einem der Ansprüche 1 bis 7, **dadurch gekennzeichnet, dass** der Emulgator (B) ein nichtionischer Emulgator, vorzugsweise ein alkoxylierter Alkohol oder eine alkoxylierte Carbonsäure, insbesondere ein alkoxylierter Alkohol ist.

**9.** Zusammensetzung nach einem der Ansprüche 1 bis 8, **dadurch gekennzeichnet, dass** sie mindestens ein vom Organosiloxan (A) unterschiedliches Organosiloxan (C) enthält, vorzugsweise ein $\alpha,\omega$-Dihdroxy-Polydimethylsiloxan und/oder ein $\alpha,\omega$-Dimethyl-Polydimethylsiloxan.

**10.** Zusammensetzung nach einem der Ansprüche 1 bis 9, **dadurch gekennzeichnet, dass** sie jeweils bezogen auf die Gesamtmasse der Zusammensetzung, folgende Bestandteile enthält:

- ein oder mehrere Organosiloxane (A) in einem Massenanteil von 10% bis 80%, vorzugsweise von 20% bis 70%, insbesondere von 40% bis 60%,
- ein oder mehrere Emulgatoren (B) in einem Massenanteil von insgesamt 1,5% bis 15%, vorzugsweise von 2% bis 10%, insbesondere von 3% bis 6%,
- ein oder mehrere Organosiloxane (C) in einem Massenanteil von 0% bis 30%, vorzugsweise von 0% bis 20%, insbesondere von 0% bis 10%,
- ein oder mehrere Zusatzstoffe (D) in einem Massenanteil von 0% bis 25%, vorzugsweise von 0% bis 15%, insbesondere von 0% bis 10%, und
- Wasser in einem Massenanteil, sodass die Summe der Massenanteile aller Bestandteile 100% ergibt.

**11.** Verfahren zur Herstellung von Organosiloxanen (A), vorzugsweise zur Herstellung einer Zusammensetzung gemäß einem der Ansprüche 1 bis 10, umfassend einen Verfahrensschritt, bei dem eine Reaktionsmischung aus

i. mindestens einem $C_2$-$C_6$-Alkylalkoxysilan und/oder mindestens einem $C_2$-$C_6$-Alkylalkoxysiloxan, vorzugs-

weise mindestens einem $C_2$-$C_6$-Alkylalkoxysiloxan, insbesondere einem Propyltriethoxysilan-Oligomeren-Gemisch,
ii. mindestens einem $C_7$-$C_{18}$-Alkylalkoxysilan und/oder mindestens einem $C_7$-$C_{18}$-Alkylalkoxysiloxan, vorzugsweise mindestens einem $C_7$-$C_{18}$-Alkylalkoxysilan, insbesondere Octyltriethoxysilan,
iii. Wasser,
iv. vorzugsweise mindestens einem mono- oder polyfunktionellen $C_2$-$C_{10}$-Alkohol,
v. vorzugsweise mindestens einem cyclischen Dimethylsiloxan,
vi. mindestens einem Tetraalkylammoniumhydroxid, vorzugsweise Tetrabutylammoniumhydroxid,
vii. mindestens einer Supersäure, vorzugsweise Trifluormethansulfonsäure,
viii. und gegebenenfalls weiteren Stoffen

umgesetzt wird.

**12.** Verwendung einer Zusammensetzung nach einem der Ansprüche 1 bis 10 als verdünnungsstabiles Hydrophobierungsmittel.

**13.** Hydraulisch abbindende Zusammensetzung, enthaltend die Komponenten

a) mindestens ein hydraulisches Bindemittel, vorzugsweise Zement,
b) mindestens eine Zusammensetzung gemäß einem der Ansprüche 1 bis 10,
c) vorzugsweise mindestens einen Zuschlagsstoff ausgewählt aus der Gruppe bestehend aus Sand, Kies, Kalkstein und Kreide,
d) vorzugsweise zusätzliches Wasser.

**14.** Hydraulisch abbindende Zusammensetzung nach Anspruch 13, **dadurch gekennzeichnet, dass** sie

- 100 Gewichtsteile der Komponente a),
- 0,1 bis 10, vorzugsweise 0,5 bis 5 Gewichtsteile der Komponente b),
- 100 bis 600, vorzugsweise 200 bis 400 Gewichtsteile der Komponente c), und
- 20 bis 100, vorzugsweise 30 bis 70 Gewichtsteile Komponente d) enthält.

**15.** Hydraulisch abbindende Zusammensetzung nach einem der Ansprüche 13 oder 14, **dadurch gekennzeichnet, dass** sie ein Mörtel, ein Estrich oder ein Beton ist.

## Claims

**1.** Composition comprising at least one organosiloxane (A), at least one emulsifier (B) and water, **characterized in that** the organosiloxane (A) has SiC-bonded $C_2$-$C_6$-alkyl radicals and SiC-bonded $C_7$-$C_{18}$-alkyl radicals.

**2.** Composition according to Claim 1, **characterized in that** it is an emulsion, preferably an oil-in-water emulsion.

**3.** Composition according to Claim 1 or 2, **characterized in that** the SiC-bonded $C_2$-$C_6$-alkyl radicals and SiC-bonded $C_7$-$C_{18}$-alkyl radicals comprise propyl radicals and octyl radicals, preferably are propyl radicals and octyl radicals.

**4.** Composition according to any of Claims 1 to 3, **characterized in that** the organosiloxane (A) contains or consists of units of the formula

$$R^1Si(OR^2)_aO_{(3-a)/2} \qquad (I)$$

and preferably units of the formula

$$R^3{}_2Si(OR^2)_bO_{(2-b)/2} \qquad (II),$$

in which
$R^1$ is a $C_2$-$C_6$-alkyl radical or a $C_7$-$C_{18}$-alkyl radical, preferably a propyl radical or an octyl radical, with the proviso

that the organosiloxane (A) contains, as $R^1$ radicals, both $C_2$-$C_6$-alkyl radicals and $C_7$-$C_{18}$-alkyl radicals, preferably both propyl radicals and octyl radicals;
$R^2$ is a $C_1$-$C_4$-alkyl radical, preferably ethyl radical, or a hydrogen atom or a radical of the formula $-[YO]_nZ$ where
Y is a $C_2$-$C_{10}$-alkylene radical, preferably a $C_2$-$C_5$-alkylene radical,
n is an integer from 1 to 10, preferably 1, and
Z is a hydrogen atom or a bond to a silicon atom;
$R^3$ is a $C_1$-$C_4$-alkyl radical, preferably a methyl radical;
a is 0, 1 or 2;
b is 0 or 1, preferably 0.

**5.** Composition according to any of Claims 1 to 4, **characterized in that** the organosiloxane (A), based on the total number of units of the formula (I) and (II), contains or consists of at least 50 mol%, preferably at least 60 mol%, especially at least 70 mol%, of units of the formula (I) and not more than 50 mol%, preferably not more than 40 mol%, especially not more than 30 mol%, of units of the formula (II).

**6.** Composition according to any of Claims 1 to 5, **characterized in that** the organosiloxane (A) contains, in parts by mass based on its total mass,

- 20% to 80%, preferably 30% to 70%, especially 40% to 60%, of SiC-bonded $C_2$-$C_6$-alkyl radicals and
- 30% to 40%, preferably 25% to 35%, especially 20% to 30%, of SiC-bonded $C_7$-$C_{18}$-alkyl radicals.

**7.** Composition according to any of Claims 1 to 6, **characterized in that** the organosiloxane (A) is preparable by a process comprising a process step in which a reaction mixture composed of

i. at least one $C_2$-$C_6$-alkylalkoxysilane and/or at least one $C_2$-$C_6$-alkylalkoxysiloxane, preferably at least one $C_2$-$C_6$-alkylalkoxysiloxane, especially a propyltriethoxysilane oligomer mixture,
ii. at least one $C_7$-$C_{18}$-alkylalkoxysilane and/or at least one $C_7$-$C_{18}$-alkylalkoxysiloxane, preferably at least one $C_7$-$C_{18}$-alkylalkoxysilane, especially octyltriethoxysilane,
iii. water,
iv. preferably at least one mono- or polyfunctional $C_2$-$C_{10}$ alcohol,
v. preferably at least one cyclic dimethylsiloxane,
vi. preferably at least one tetraalkylammonium hydroxide, in particular tetrabutylammonium hydroxide,
vii. preferably at least one superacid, in particular trifluoromethanesulfonic acid,
viii. and optionally further substances

is converted.

**8.** Composition according to any of Claims 1 to 7, **characterized in that** the emulsifier (B) is a nonionic emulsifier, preferably an alkoxylated alcohol or an alkoxylated carboxylic acid, especially an alkoxylated alcohol.

**9.** Composition according to any of Claims 1 to 8, **characterized in that** it comprises at least one organosiloxane (C) other than the organosiloxane (A), preferably an $\alpha,\omega$-dihydroxypolydimethylsiloxane and/or an $\alpha,\omega$-dimethylpolydimethylsiloxane.

**10.** Composition according to any of Claims 1 to 9, **characterized in that** it contains, based in each case on the total mass of the composition, the following constituents:

- one or more organosiloxanes (A) in a proportion by mass of 10% to 80%, preferably of 20% to 70%, especially of 40% to 60%,
- one or more emulsifiers (B) in a total proportion by mass of 1.5% to 15%, preferably of 2% to 10%, especially of 3% to 6%,
- one or more organosiloxanes (C) in a proportion by mass of 0% to 30%, preferably of 0% to 20%, especially of 0% to 10%,
- one or more additives (D) in a proportion by mass of 0% to 25%, preferably of 0% to 15%, especially of 0% to 10%, and
- water in such a proportion by mass that the sum total of the proportions by mass of all constituents is 100%.

**11.** Process for preparing organosiloxanes (A), preferably for preparing a composition according to any of Claims 1 to 10,

comprising a process step in which a reaction mixture composed of

i. at least one $C_2$-$C_6$-alkylalkoxysilane and/or at least one $C_2$-$C_6$-alkylalkoxysiloxane, preferably at least one $C_2$-$C_6$-alkylalkoxysiloxane, especially a propyltriethoxysilane oligomer mixture,
ii. at least one $C_7$-$C_{18}$-alkylalkoxysilane and/or at least one $C_7$-$C_{18}$-alkylalkoxysiloxane, preferably at least one $C_7$-$C_{18}$-alkylalkoxysilane, especially octyltriethoxysilane,
iii. water,
iv. preferably at least one mono- or polyfunctional $C_2$-$C_{10}$ alcohol,
v. preferably at least one cyclic dimethylsiloxane,
vi. at least one tetraalkylammonium hydroxide, preferably tetrabutylammonium hydroxide,
vii. at least one superacid, preferably trifluoromethanesulfonic acid,
viii. and optionally further substances is converted.

**12.** Use of a composition according to any of Claims 1 to 10 as dilution-stable hydrophobizing agent.

**13.** Hydraulically setting composition comprising the following components:

a) at least one hydraulic binder, preferably cement,
b) at least one composition according to any of Claims 1 to 10,
c) preferably at least one admixture selected from the group consisting of sand, gravel, limestone and chalk,
d) preferably additional water.

**14.** Hydraulically setting composition according to Claim 13, **characterized in that** it comprises

- 100 parts by weight of component a),
- 0.1 to 10, preferably 0.5 to 5, parts by weight of component b),
- 100 to 600, preferably 200 to 400, parts by weight of component c), and
- 20 to 100, preferably 30 to 70, parts by weight of component d).

**15.** Hydraulically setting composition according to either of Claims 13 and 14, **characterized in that** it is a mortar, a screed or a concrete.

**Revendications**

**1.** Composition, contenant au moins un organosiloxane (A), au moins un émulsifiant (B) et de l'eau, **caractérisée en ce que** l'organosiloxane (A) présente des radicaux $C_2$-$C_6$-alkyle liés par SiC et des radicaux $C_7$-$C_{18}$-alkyle liés par SiC.

**2.** Composition selon la revendication 1, **caractérisée en ce qu'**il s'agit d'une émulsion, de préférence une émulsion huile-dans-eau.

**3.** Composition selon la revendication 1 ou 2, **caractérisée en ce que** les radicaux $C_2$-$C_6$-alkyle liés par SiC et les radicaux $C_7$-$C_{18}$-alkyle liés par SiC comprennent des radicaux propyle et des radicaux octyle et sont de préférence des radicaux propyle et des radicaux octyle.

**4.** Composition selon l'une des revendications 1 à 3, **caractérisée en ce que** l'organosiloxane (A) contient des motifs de formule

$$R^1Si\,(OR^2)_aO_{(3-a)/2} \qquad (I),$$

et de préférence des motifs de formule

$$R^3{}_2Si(OR^2)_bO_{(2-b)/2} \qquad (II),$$

ou est constitué par ceux-ci,
dans lesquelles

$R^1$ représente un radical $C_2$-$C_6$-alkyle ou un radical $C_7$-$C_{18}$-alkyle, de préférence un radical propyle ou un radical octyle, à condition que l'organosiloxane (A) contienne, en tant que radicaux $R^1$, tant des radicaux $C_2$-$C_6$-alkyle que des radicaux $C_7$-$C_{18}$-alkyle, de préférence tant des radicaux propyle que des radicaux octyle ;
$R^2$ représente un radical $C_1$-$C_4$-alkyle, de préférence un radical éthyle, ou un atome d'hydrogène ou un radical de formule $-[YO]_nZ$, dans laquelle
Y représente un radical $C_2$-$C_{10}$-alkylène, de préférence un radical $C_2$-$C_5$-alkylène,
n représente un nombre entier de 1 à 10, de préférence 1 et
Z représente un atome d'hydrogène ou une liaison avec un atome de silicium ;
$R^3$ représente un radical $C_1$-$C_4$-alkyle, de préférence un radical méthyle ;
a représente 0, 1 ou 2 ;
b représente 0 ou 1, de préférence 0.

**5.** Composition selon l'une des revendications 1 à 4, **caractérisée en ce que** l'organosiloxane (A), par rapport au nombre total de motifs de formule (I) et (II), contient ou est constitué par au moins 50% en mole, de préférence au moins 60% en mole, en particulier au moins 70% en mole, de motifs de formule (I) et au maximum 50% en mole, de préférence au maximum 40% en mole, en particulier au maximum 30% en mole de motifs de formule (II).

**6.** Composition selon l'une des revendications 1 à 5, **caractérisée en ce que** l'organosiloxane (A) contient, en parties en masse par rapport à sa masse totale,

- 20% à 80%, de préférence 30% à 70%, en particulier 40% à 60% de radicaux $C_2$-$C_6$-alkyle liés par SiC et
- 30% à 40%, de préférence 25% à 35%, en particulier 20% à 30% de radicaux $C_7$-$C_{18}$-alkyle liés par SiC.

**7.** Composition selon l'une des revendications 1 à 6, **caractérisée en ce que** l'organosiloxane (A) peut être préparé selon un procédé comprenant une étape de procédé dans laquelle un mélange réactionnel constitué par

i. au moins un $C_2$-$C_6$-alkylalcoxysilane et/ou au moins un $C_2$-$C_6$-alkylalcoxysiloxane, de préférence au moins un $C_2$-$C_6$-alkylalcoxysiloxane, en particulier un mélange d'oligomères de propyltriéthoxysilane,
ii. au moins un $C_7$-$C_{18}$-alkylalcoxysilane et/ou au moins un $C_7$-$C_{18}$-alkylalcoxysiloxane, de préférence au moins un $C_7$-$C_{18}$-alkylalcoxysilane, en particulier de l'octyltriéthoxysilane,
iii. de l'eau,
iv. de préférence au moins une $C_2$-$C_{10}$-alcool monofonctionnel ou polyfonctionnel,
v. de préférence au moins un diméthylsiloxane cyclique,
vi. de préférence au moins un hydroxyde de tétraalkylammonium, en particulier de l'hydroxyde de tétrabutylammonium,
vii. de préférence au moins un superacide, en particulier de l'acide trifluorométhanesulfonique,
viii. et le cas échéant d'autres substances est transformé.

**8.** Composition selon l'une des revendications 1 à 7, **caractérisée en ce que** l'émulsifiant (B) est un émulsifiant non ionique, de préférence un alcool alcoxylé ou un acide carboxylique alcoxylé, en particulier un alcool alcoxylé.

**9.** Composition selon l'une des revendications 1 à 8, **caractérisée en ce qu'**elle contient au moins un organosiloxane (C) différent de l'organosiloxane (A), de préférence un $\alpha,\omega$-dihydroxy-polydiméthylsiloxane et/ou un $\alpha,\omega$-diméthyl-polydiméthylsiloxane.

**10.** Composition selon l'une des revendications 1 à 9, **caractérisée en ce qu'**elle contient, à chaque fois par rapport à la masse totale de la composition, les constituants suivants :

- un ou plusieurs organosiloxane(s) (A) en une proportion massique de 10% à 80%, de préférence de 20% à 70%, en particulier de 40% à 60%,
- un ou plusieurs émulsifiant(s) (B) en une proportion massique totale de 1,5% à 15%, de préférence de 2% à 10%, en particulier de 3% à 6%,
- un ou plusieurs organosiloxane(s) (C) en une proportion massique de 0% à 30%, de préférence de 0% à 20%, en particulier de 0% à 10%,
- un ou plusieurs additif(s) (D) en une proportion massique de 0% à 25%, de préférence de 0% à 15%, en particulier de 0% à 10% et
- de l'eau en une proportion massique telle que la somme des proportions massiques de tous les constituants vaut 100%.

**11.** Procédé pour la préparation d'organosiloxanes (A), de préférence pour la préparation d'une composition selon l'une des revendications 1 à 10, comprenant une étape de procédé dans laquelle un mélange réactionnel constitué par

i. au moins un $C_2$-$C_6$-alkylalcoxysilane et/ou au moins un $C_2$-$C_6$-alkylalcoxysiloxane, de préférence au moins un $C_2$-$C_6$-alkylalcoxysiloxane, en particulier un mélange d'oligomères de propyltriéthoxysilane,
ii. au moins un $C_7$-$C_{18}$-alkylalcoxysilane et/ou au moins un $C_7$-$C_{18}$-alkylalcoxysiloxane, de préférence au moins un $C_7$-$C_{18}$-alkylalcoxysilane, en particulier de l'octyltriéthoxysilane,
iii. de l'eau,
iv. de préférence au moins une $C_2$-$C_{10}$-alcool monofonctionnel ou polyfonctionnel,
v. de préférence au moins un diméthylsiloxane cyclique,
vi. au moins un hydroxyde de tétraalkylammonium, de préférence de l'hydroxyde de tétrabutylammonium,
vii. au moins un superacide, de préférence de l'acide trifluorométhanesulfonique,
viii. et le cas échéant d'autres substances est transformé.

**12.** Utilisation d'une composition selon l'une des revendications 1 à 10 en tant qu'agent d'hydrofugation stable à la dilution.

**13.** Composition à prise hydraulique, contenant les composants

a) au moins un liant hydraulique, de préférence du ciment,
b) au moins une composition selon l'une des revendications 1 à 10,
c) de préférence au moins un additif choisi dans le groupe constitué par le sable, le gravier, le calcaire et la craie,
d) de préférence de l'eau supplémentaire.

**14.** Composition à prise hydraulique selon la revendication 13, **caractérisée en ce qu'**elle contient

- 100 parties en poids du composant a),
- 0,1 à 10, de préférence 0,5 à 5 parties en poids du composant b),
- 100 à 600, de préférence 200 à 400 parties en poids du composant c) et
- 20 à 100, de préférence 30 à 70 parties en poids du composant d).

**15.** Composition à prise hydraulique selon l'une des revendications 13 ou 14, **caractérisée en ce qu'**il s'agit d'un mortier, d'un chape ou d'un béton.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 2887467 A
- DE 1076946
- DE 102004056977 A1
- DE 102005019254 A1
- WO 2006097206 A1
- WO 2013053609 A1
- WO 0046167 A
- WO 2012136589 A1
- EP 1982964 A1
- EP 3243807 A1
- CN 103449750 B
- CN 103819127 A
- CN 105111932 A
- CN 105293992 A
- CN 107556050 A
- DD 137720
- WO 2006081892 A1
- EP 0814110 A1
- EP 1205481 A2
- EP 1205505 A
- EP 1205505 A2
- WO 2006081891 A1
- WO 2008128819 A1
- EP 0538555 A1


### In der Beschreibung aufgeführte Nicht-Patentliteratur


- M-, D-, T-, Q-Nomenklatur zur Beschreibung der Einheiten von Organosiloxanen. **W. NOLL**. Chemie und Technologie der Silicone. Verlag Chemie GmbH, January 1996, 2
- **BENET L.Z.** ; **GOYAN J.E.** Potentiometric determination of dissociation constants. *J. Pharm. Sci.*, 1967, vol. 56, 665-680
- **W. C. GRIFFIN**. Classification of surface active agents by HLB. *J. Soc. Cosmet. Chem.*, 1949, vol. 1, 311-326